# EUROPÄISCHE PATENTSCHRIFT

(11) **EP 3 812 068 B1**
(45) Veröffentlichungstag und Bekanntmachung des Hinweises auf die Patenterteilung: **13.09.2023**
(21) Anmeldenummer: 19205408.8
(22) Anmeldetag: 25.10.2019
(51) Int. Cl.: B23B 51/00, B23C 5/10, G06K 19/04, G06K 19/07

(54) **IDENTIFIKATIONSELEMENT**
IDENTIFICATION ELEMENT
ÉLÉMENT D'IDENTIFICATION

(43) Veröffentlichungstag der Anmeldung: 28.04.2021
(73) Patentinhaber: Fraisa SA, 4512 Bellach (CH)
(72) Erfinder: Maushart, Josef, 4500 Solothurn (CH); Badertscher, Joel, 3322 Urtenen - Schönbühl (CH); Rieder, Wolfgang, 4500 Solothurn (CH); Kammermeier, Dirk, 4500 Solothurn (CH)
(74) Vertreter: Keller Schneider Patent- und Markenanwälte AG

(56) Entgegenhaltungen:
- EP-A1- 2 886 229
- WO-A1-2014/028462
- WO-A1-2016/025963
- DE-A1-102017 110 647
- DE-U1-202010 011 574
- GB-A- 923 806
- US-A1- 2006 008 332
- US-A1- 2008 195 244

## Beschreibung

### Technisches Gebiet

Die Erfindung betrifft ein aufsteckbares und wiederabnehmbares Identifikationselement, gemäß dem Oberbegriff des Patentanspruchs 1, für ein spanendes Schaftwerkzeug, insbesondere einen Bohrer oder Schaftfräser, wobei das Identifikationselement einen Identifikator zur Identifikation des Schaftwerl<zeugs aufweist.

Ein derartiges Identifikationselement geht beispielsweise aus der EP 2 886 229 A1 hervor.

### Stand der Technik

Aufsteckbare und wiederabnehmbare Identifikationselemente für spanende Schaftwerkzeuge, insbesondere Bohrer oder Schaftfräser, welche einen Identifikator zum Identifizieren von Schaftwerkzeugen aufweisen, sind bekannt. Solche Identifil<ationselemente können auf den Schaft eines Schaftwerl<zeugs aufgesteckt und von dem Schaft des Schaftwerl<zeugs wieder abgenommen werden. Wenn ein solches Identifil<ationselement auf ein Schaftwerkzeug aufgesteckt ist, ermöglicht es die Identifikation des entsprechenden Schaftwerl<zeugs. Ein Beispiel eines solchen Identifil<ationselements, welches an Schaftwerkzeugen wie zum Beispiel Bohrern angebracht werden kann, ist in der WO 2014/028462 A1 der Stanley Black & Decker, Inc. beschrieben. Das dort beschriebene Identifikationselement umfasst einen RFID-Transponder mit einem digitalen, kennzeichnenden Code als Identifikator. Weiter umfasst dieses Identifikationselement einen Kern aus Metall und einen Deckel aus Plastik, welcher den Kern und den RFID-Transponder umschliesst. Dabei weist der Kern auf seiner Mantelfläche mehrere Rillen auf, welche mit Vorsprüngen am Deckel zusammenwirken, um diesen am Kern zu halten. Weiter kann der Deckel aber auch mit Klebstoff am Kern gehalten werden. Dieses Identifikationselement kann auf den Schaft des Bohrers aufgesteckt und in Axialrichtung des Bohrers festgesetzt werden, indem es mit einer Madenschraube, welche in den Kern eingeschraubt wird, festgeschraubt wird.

Derartige Identifikationselemente haben den Nachteil, dass ihr aufstecken auf dem Schaft des Bohrers bzw. Schaftwerl<zeugs aufwändig ist und sie die Funl<tion des Bohrers bzw. Schaftwerl<zeugs, auf welches sie aufgesteckt sind, nachhaltig stören und beeinträchtigen. So wird durch ihr Aufbringen mittels der Madenschraube der Schaft des Schaftwerl<zeugs geschwächt, wodurch die Wahrscheinlichkeit eines Werl<zeugbruchs erhöht ist. Weiter erzeugen derartige Identifikationselemente aufgrund ihres hohen Gewichts bei rotierendem Betrieb des Schaftwerl<zeugs schon bei kleinen Fehlern in ihrer Austarierung eine starke Unwucht des Schaftwerl<zeugs, was zu einer exzentrischen Rotationsbewegung des Schaftwerl<zeugs führt. Aufgrund dieser exzentrischen Rotationsbewegung können einerseits keine sauberen Oberflächen beim zu bearbeitenden Werkstück erzeugt werden. Andererseits wird durch die exzentrischen Rotationsbewegungen das Schaftwerkzeug sehr rasch beschädigt, indem die Schneiden des Schaftwerl<zeugs deutlich rascher abgenutzt werden und indem die Wahrscheinlichkeit eines Werl<zeugbruchs zunimmt.

### Darstellung der Erfindung

Aufgabe der Erfindung ist es, ein dem eingangs genannten technischen Gebiet zugehörendes, aufsteckbares und wiederabnehmbares Identifikationselement zu schaffen, welches einfach aufsteckbar ist und die Funktion des Schaftwerl<zeugs, auf welches es aufgesteckt ist, weder nachhaltig stört noch beeinträchtigt.

Die Lösung der Aufgabe ist durch die Merkmale des Anspruchs 1 definiert. Gemäss der Erfindung ist das Identifikationselement eine zweiteilige Ringhülse, welche als erstes Teil ein elastisches Innenelement und als zweites Teil einen auf das elastische Innenelement aufbringbaren Aussenring mit einer in Axialrichtung des Aussenrings durchgehenden Öffnung zur Aufnahme des elastischen Innenelements sowie eines in die Axialrichtung des Aussenrings ausgerichteten Schafts des Schaftwerl<zeugs aufweist, wobei das elastische Innenelement aus einem elastischen Material gefertigt ist, wobei das elastische Material ein Material mit einem Elastizitätsmodul *E* von höchstens 10 GPa, besonders bevorzugt höchstens 5 GPa, ganz besonders bevorzugt höchstens 1 GPa ist, wobei der Aussenring einen seiner durchgehenden Öffnung zugewandten und seine durchgehende Öffnung abgrenzenden Innenmantel aufweist, welcher eine Wellenstruktur zur Erhöhung von Haltel<räften aufweist, welche Haltekräfte zwischen dem Aussenring und dem elastischen Innenelement auftreten, wenn das elastische Innenelement in der Öffnung des Aussenrings aufgenommen ist, wobei die Wellenstruktur eine Amplitude im Bereich von 0.02 mm bis 0.1 mm aufweist.

Wie eingangs erwähnt, ist das Identifikationselement aufsteckbar und wieder abnehmbar. Dies bedeutet vorzugsweise, dass das Identifikationselement auf den Schaft des Schaftwerkzeugs aufbringbar und von dem Schaft des Schaftwerl<zeugs wieder abnehmbar ist.

Wie eingangs ebenfalls erwähnt, weist das Identifikationselement einen Identifikator zur Identifikation des Schaftwerl<zeugs auf. Dieser Identifikator ist eine kennzeichnende, insbesondere eindeutig kennzeichnende Markierung. Er kann beispielsweise eine visuell erkennbare, kennzeichnende Markierung, insbesondere visuell erkennbare, eindeutig kennzeichnende Markierung sein. Er kann aber beispielsweise auch eine haptisch erkennbare, kennzeichnende Markierung, insbesondere haptisch erkennbare, eindeutig kennzeichnende Markierung sein. Genauso kann er aber beispielsweise auch ein digitaler, kennzeichnender Code, insbesondere ein digitaler, eindeutig kennzeichnender Code sein. Ein digitaler, kennzeichnender Code, insbesondere ein digitaler, eindeutig I<ennzeichnender Code als Identifikator hat den Vorteil, dass er bei Schaftwerl<zeugen, welche in programmierbaren Werkzeugmaschinen eingesetzt werden, digital ausgelesen werden kann und somit eine Automatisierung des Betriebs der jeweiligen Werkzeugmaschine erheblich erleichtert.

Erfindungsgemäss ist das Identifikationselement eine zweiteilige Ringhülse, welche als erstes Teil ein elastisches Innenelement und als zweites Teil einen auf das elastische Innenelement aufbringbaren Aussenring aufweist. Dabei können das erste Teil bzw. das elastische Innenelement und das zweite Teil bzw. der Aussenring der zweiteiligen Ringhülse je aus einem einzigen Stück gefertigt sein oder aus mehreren Elementen aufgebaut sein. Unabhängig davon, ob das elastische Innenelement und der Aussenring je aus einem einzigen Stück gefertigt sind oder aus mehreren Elementen aufgebaut sind, ist der Aussenring erfindungsgemäss auf das elastische Innenelement aufbringbar. Das bedeutet bevorzugt, dass der Aussenring auf das elastische Innenelement aufschiebbar oder aufschraubbar ist. Um auf das elastische Innenelement aufbringbar zu sein, weist der Aussenring eine in Axialrichtung des Aussenrings durchgehende Öffnung zur Aufnahme des elastischen Innenelements sowie des in die Axialrichtung des Aussenrings ausgerichteten Schafts des Schaftwerl<zeugs auf.

Die zweiteilige Ringhülse mit dem elastischen Innenelement und dem Aussenring hat den Vorteil, dass das Identifikationselement auf einfache Art und Weise auf den Schaft des Schaftwerl<zeugs aufgesteckt werden kann. Zudem kann insbesondere das elastische Innenelement aus einem vergleichsweise leichten, elastischen Material gefertigt werden, womit das Identifikationselement nur ein geringes Gewicht aufweist. Um das Gewicht des Identifil<ationselements zusätzlich zu senken, kann zudem auch der Aussenring aus einem vergleichsweise leichten Material oder aus einem zwar schwereren Material, dafür aber mit einer geringeren Wandstärke, gefertigt werden. Dies alles führt dazu, dass das Identifikationselement nur ein geringes Gewicht aufweist und somit auch bei einer allfälligen fehlerhaften Austarierung bei rotierendem Betrieb des Schaftwerl<zeugs höchstens eine geringe Unwucht des Schaftwerl<zeugs erzeugt. Zudem wird aber aufgrund der Konstruktion als zweiteilige Ringhülse auch auf einfache Art und Weise eine optimal austarierte Bauweise des Identifil<ationselements ermöglicht. Entsprechend stellt die erfindungsgemässe Lösung ein Identifikationselement bereit, welches einfach aufsteckbar ist und zugleich die Funl<tion des Schaftwerl<zeugs, auf welches es aufgesteckt ist, weder nachhaltig stört noch beeinträchtigt.

Bevorzugt ist eine Anordnung mit einem Schaftwerkzeug und einem erfindungsgemässen Identifil<ationselement.

Dabei weist das Identifikationselement bevorzugt bei auf dem elastischen Innenelement aufgebrachten Aussenring eine in eine Axialrichtung des Identifil<ationselements durchgehende Öffnung zur Aufnahme des Schafts des Schaftwerl<zeugs auf, wobei diese Öffnung des Identifil<ationselements einen Durchmesser aufweist, welcher im Wesentlichen einem Schaftdurchmesser des Schafts des Schaftwerl<zeugs entspricht. Dies hat den Vorteil, dass das Identifikationselement optimal auf dem Schaft des Schaftwerkzeugs aufgesteckt und auf diesem in seine Axialrichtung festgesetzt werden kann.

Vorzugsweise ist unter dem auf dem Schaftwerkzeug aufgesteckten und in seine Axialrichtung festgesetzten Identifikationselement auf dem Schaft des Schaftwerl<zeugs eine visuell erkennbare Markierung angebracht, welcher eine Zuordnung des Schaftwerkzeugs zum Identifikationselement sowie eine Zuordnung des Identifil<ationselements zum Schaftwerkzeug ermöglicht, wenn das Identifikationselement nicht auf dem Schaftwerkzeug aufgesteckt ist. Dabei kann die visuell erkennbare Markierung auf dem Schaft des Schaftwerl<zeugs beispielsweise aufgedruckt, aufgeklebt oder eingraviert sein.

Bevorzugt ist eine Anordnung mit einem erfindungsgemässen Identifikationselement und einem Auslesegerät zum Auslesen des Identifil<ationselements zum Lesen des Identifikators. Vorteilhafterweise weisen dabei das Identifikationselement und das Auslesegerät Drahtlosl<ommunil<ationsmittel zum Übermitteln des Identifikators auf. So kann das Identifikationselement beispielsweise einen RFID-Transponder mit dem Identifikator umfassen, während das Auslesegerät RFID-Lesegerät ist. Beispielsweise kann das Identifikationselement auch ein Bluetooth-Element zum Übermitteln des Identifikators umfassen, während das Auslesegerät ein Bluetooth-Gerät ist. Das Identifikationselement kann aber auch ohne Drahtlosl<ommunil<ationsmittel auskommen. So kann das Auslesegerät beispielsweise auch eine Kamera sein, mit welcher Bilder des Identifil<ationselements aufgenommen werden können und welche eine Erkennungssoftware zur Erkennung des Identifikators in den aufgenommenen Bildern aufweist.

Vorteilhafterweise weist das Identifikationselement bei auf dem elastischen Innenelement aufgebrachten Aussenring eine in eine Axialrichtung des Identifil<ationselements durchgehende Öffnung zur Aufnahme des Schafts des Schaftwerl<zeugs auf. Dabei ist die Öffnung im Identifikationselement unter anderem durch die Öffnung im Aussenring gebildet. Zusätzlich kann aber auch eine entsprechende Öffnung im elastischen Innenelement zur Bildung der Öffnung im Identifikationselement mitverantwortlich sein. Vorteilhafterweise weist die Öffnung des Identifil<ationselements einen Durchmesser auf, welcher im Wesentlichen einem Schaftdurchmesser des Schafts des Schaftwerl<zeugs entspricht. Vorzugsweise ist der Durchmesser der Öffnung des Identifil<ationselements mindestens 10 mm gross.

Vorzugsweise ist in einem aufgesteckten Zustand, in welchem das Identifikationselement auf den Schaft des Schaftwerl<zeugs aufgesteckt und in seine Axialrichtung festgesetzt ist, die Axialrichtung des Identifil<ationselements parallel zum Schaft des Schaftwerl<zeugs ausgerichtet. Dabei ist vorzugsweise zugleich der Aussenring mit seiner Axialrichtung in die Axialrichtung des Identifil<ationselements ausgerichtet.

Vorzugsweise ist das elastische Innenelement ein elastischer Innenring. Vorteilhafterweise weist der elastische Innenring demnach eine in seine Axialrichtung durchgehende Öffnung zur Aufnahme des Schafts des Schaftwerl<zeugs auf. Vorzugsweise ist in einem aufgesteckten Zustand, in welchem das elastische Innenelement auf den Schaft des Schaftwerl<zeugs aufgesteckt ist, die Axialrichtung des elastischen Innenelements parallel zum Schaft des Schaftwerl<zeugs ausgerichtet. Bevorzugt weist die Öffnung des elastischen Innenelements dabei einen Durchmesser auf, welcher im Wesentlichen dem Schaftdurchmesser des Schafts des Schaftwerl<zeugs entspricht. Vorzugsweise ist der Durchmesser der Öffnung des elastischen Innenelements mindestens 10 mm gross.

Alternativ dazu besteht aber auch die Möglichkeit, dass das elastische Innenelement kein elastischer Innenring ist. In diesem Fall kann das elastische Innenelement beispielsweise auch ohne Öffnung auskommen und einfach an den Schaft des Schaftwerl<zeugs anlegbar sein. In diesem Fall ist das elastische Innenelement in einer Orientierung seitlich an den Schaft anlegbar, in welcher eine Axialrichtung des elastischen Innenelements parallel zum Schaft ausgerichtet ist. Wenn das elastische Innenelement in dieser Orientierung an den Schaft des Schaftwerl<zeugs angelegt ist, so kann der Aussenring über den Schaft geführt und auf den Schaft mit dem an den Schaft angelegten elastischen Innenelement aufgebracht bzw. aufgeschoben oder aufgeschraubt werden, um das Identifil<ationselement auf den Schaft aufzubringen und in seine Axialrichtung auf dem Schaft festzusetzen.

Vorteilhafterweise ist die zweiteilige Ringhülse auf den Schaft des Schaftwerkzeugs aufsteckbar, indem zunächst das elastische Innenelement an den Schaft angelegt oder über den Schaft geschoben wird, wonach der Aussenring über den Schaft und auf das elastische Innenelement aufgebracht bzw. aufgeschoben oder aufgeschraubt wird, sodass der Schaft von der Öffnung im Aussenring aufgenommen ist bzw. sodass der Schaft durch die Öffnung im Aussenring verläuft. Vorteilhafterweise ist die zweiteilige Ringhülse zudem auf dem Schaft des Schaftwerkzeugs in Axialrichtung festsetzbar, indem der Aussenring über den Schaft und auf das bereits zuvor an den Schaft angelegte oder auf den Schaft geschobene elastische Innenelement aufgebracht bzw. aufgeschoben oder aufgeschraubt wird. In einer Variante dazu besteht aber auch die Möglichkeit, dass die zweiteilige Ringhülse durch einen zusätzlichen Schritt wie beispielsweise ein Festschrauben auf dem Schaft des Schaftwerkzeugs in Axialrichtung festsetzbar ist. Hierzu kann beispielsweise zuerst das elastische Innenelement auf den Schaft des Schaftwerkzeugs geschoben werden. Anschliessend kann in einem ersten Beispiel das elastische Innenelement mit einer Schraube festgeschraubt werden, wonach der Aussenring aufgebracht bzw. aufgeschoben oder aufgeschraubt wird. In einem zweiten Beispiel hingegen kann der Aussenring auf das elastische Innenelement geschraubt werden, während in einem dritten Beispiel oder der Aussenring auf das elastische Innenelement geschoben und mit einer Schraube festgeschraubt werden kann.

Vorzugsweise ist in einem aufgesteckten Zustand, in welchem das Identifikationselement auf den Schaft des Schaftwerkzeugs aufgesteckt und in seine Axialrichtung festgesetzt ist, die Axialrichtung des Aussenrings parallel zum Schaft des Schaftwerkzeugs ausgerichtet.

Vorzugsweise ist dabei die Öffnung des Aussenrings zur Aufnahme des auf den Schaft des Schaftwerl<zeugs aufgesteckten oder an den Schaft des Schaftwerl<zeugs angelegten elastischen Innenelements ausgebildet. Besonders bevorzugt ist dabei die Öffnung des Aussenrings derart ausgebildet, dass das elastische Innenelement in der Öffnung des Aussenrings aufnehmbar ist, wenn das elastische Innenelement derart zum Aussenring ausgerichtet ist, dass die Axialrichtung des elastischen Innenelements und die Axialrichtung des Aussenrings koaxial zueinander angeordnet sind. Bevorzugt weist die Öffnung des Aussenrings dabei einen Durchmesser auf, welcher mindestens dem Schaftdurchmesser des Schafts des Schaftwerl<zeugs entspricht. Der Durchmesser der Öffnung des Aussenrings kann somit gleich gross wie der Schaftdurchmesser des Schafts des Schaftwerl<zeugs oder aber auch grösser als der Schaftdurchmesser des Schafts des Schaftwerl<zeugs sein.

Vorzugsweise ist eine entlang der Axialrichtung des Identifil<ationselements gemessene Höhe des Identifil<ationselements kleiner als der Durchmesser der Öffnung im Identifikationselement zur Aufnahme des Schafts des Schaftwerkzeugs im Identifikationselement, wenn das Identifikationselement zusammengesetzt ist, d.h. wenn der Aussenring mit seiner Axialrichtung koaxial zur Axialrichtung des elastischen Innenelements ausgerichtet auf das elastische Innenelement aufgebracht ist. Dabei ist der Durchmesser der Öffnung im Identifikationselement bevorzugt in eine senkrecht zur Axialrichtung des Identifikationselements ausgerichtete Radialrichtung gemessen.

Alternativ dazu besteht aber auch die Möglichkeit, dass die entlang der Axialrichtung des Identifikationselements gemessene Höhe des Identifil<ationselements gleich gross wie oder grösser als der Durchmesser der Öffnung im Identifikationselement zur Aufnahme des Schafts des Schaftwerkzeugs im Identifikationselement ist, wenn das Identifikationselement zusammengesetzt ist, d.h. wenn der Aussenring mit seiner Axialrichtung koaxial zur Axialrichtung des elastischen Innenelements ausgerichtet auf das elastische Innenelement aufgebracht ist.

Vorzugsweise ist das elastische Innenelement ein Klemmring, welcher auf den Schaft des Schaftwerkzeugs klemmbar ist. Dies hat den Vorteil, dass das elastische Innenelement auf einfache Art und Weise auf den Schaft des Schaftwerkzeugs aufbringbar und in Axialrichtung auf dem Schaft des Schaftwerkzeugs festsetzbar ist. Dabei ist unerheblich, ob der Klemmring ein einteiliger, ein zweiteiliger oder ein mehrteiliger Klemmring ist. Bevorzugt ist ein Klemmring ein Ring, welcher eine in seine Axialrichtung durchgehende Öffnung zur Aufnahme einer Welle bzw. des Schafts des Schaftwerkzeugs aufweist und zumindest in eine radiale Richtung, welche rechtwinklig zu seiner Axialrichtung ausgerichtet ist, elastisch deformierbar ist, um unter Krafteinwirkung auf der Welle bzw. dem Schaft des Schaftwerkzeugs in seine Axialrichtung festgesetzt zu werden. Dabei ist unerheblich, ob die Krafteinwirkung durch ein Element des Klemmrings wie zum Beispiel eine Schraube oder durch den Aussenring bewirkt wird. So kann die Krafteinwirkung beispielsweise dadurch bewirkt werden, dass der Aussenring mit seiner Axialrichtung koaxial zur Axialrichtung des elastischen Innenelements bzw. des Klemmrings ausgerichtet mit seiner Öffnung über das elastische Innenelement bzw. den Klemmring aufgebracht bzw. geschoben oder geschraubt wird, wodurch das elastische Innenelement bzw. der Klemmring zusammengepresst und in eine radiale Richtung, welche rechtwinklig zur Axialrichtung des elastischen Innenelements ausgerichtet ist, elastisch deformiert wird.

Damit ist das elastische Innenelement, wenn das elastische Innenelement ein Klemmring ist, auch ein elastischer Innenring.

Als Alternative besteht auch die Möglichkeit, dass das elastische Innenelement kein Klemmring ist. Dabei kann das elastische Innenelement beispielsweise ein Ring und damit ein elastischer Innenring sein. Das elastische Innenelement kann aber auch anders als ein Ring geformt sein. Demnach kann das elastische Innenelement auch ohne in seine Axialrichtung durchgehende Öffnung zur Aufnahme des Schafts des Schaftwerkzeugs auskommen. So kann das elastische Innenelement beispielsweise ein Element sein, welches zum Aufstecken und Festsetzen des Identifikationselements auf den Schaft des Schaftwerkzeugs in einer Orientierung mit seiner Axialrichtung parallel zum Schaft des Schaftwerkzeugs ausgerichtet seitlich an den Schaft des Schaftwerkzeugs anlegbar ist, wonach der Aussenring über den Schaft des Schaftwerkzeugs und das elastische Innenelement aufbringbar bzw. aufschiebbar oder aufschraubbar ist, um das Identifikationselement auf dem Schaft des Schaftwerkzeugs aufzustecken und in Axialrichtung festzusetzen.

Das elastische Innenelement ist aus einem elastischen Material, insbesondere einem Elastomer, gefertigt. Dies hat den Vorteil, dass das elastische Innenelement aufgrund seiner elastischen Eigenschaften, welche es aufgrund des Materials, aus welchem das elastische Innenelement gefertigt ist, auf einfache Art und Weise auf dem Schaft des Schaftwerl<zeugs in Axialrichtung festgesetzt werden kann.

Dabei ist ein elastisches Material ein Material mit einem Elastizitätsmodul *E* von höchstens 10 GPa, besonders bevorzugt höchstens 5 GPa, ganz besonders bevorzugt höchstens 1 GPa. Das elastische Material kann aber auch ein Elastizitätsmodul *E* von mehr als 10 GPa aufweisen. Beispielsweise kann das Elastizitätsmodul *E* des elastischen Materials bei etwa 20 GPa liegen.

Ein Elastomer ist bevorzugt ein elastisch verformbarer Kunststoff, dessen Glasübergangspunkt sich unterhalb der Einsatztemperatur, besonders bevorzugt unterhalb von Raumtemperatur befindet.

Wenn das elastische Innenteil aus einem elastischen Material, insbesondere einem Elastomer gefertigt ist, so weist der elastische Innenteil vorzugsweise nach DIN ISO 7619-1:2012-02 eine Shorehärte von mindestens 65A auf. Ein entsprechender Elastomer wird gegenwärtig beispielsweise von BASF unter der Marke Elastollan^{®} unter der Bezeichnung C 65 A HPM vertrieben.

In einer Variante dazu besteht aber auch die Möglichkeit, dass das elastische Innenteil nicht aus einem Elastomer, sondern aus einem anderen elastischen Material gefertigt ist.

Alternativ zu diesen Varianten besteht auch die Möglichkeit, dass das elastische Innenelement nicht aus einem elastischen Material gefertigt ist. So kann das elastische Innenelement beispielsweise seine elastischen Eigenschaften aufgrund seiner Geometrie aufweisen.

Falls das elastische Innenelement ein elastischer Innenring ist, so weist das elastische Innenelement bevorzugt einem Aussenmantel auf, auf welchem ein Anschlag angeordnet ist, an welchem der Aussenring anschlägt, wenn der Aussenring mit seiner Axialrichtung koaxial zur Axialrichtung des elastischen Innenelements ausgerichtet mit der Öffnung des Aussenrings in eine in seine Axialrichtung zeigende Aufbringrichtung über das elastische Innenelement aufgebracht bzw. geschoben oder geschraubt wird, sodass eine Weiterbewegung des Aussenrings in die Aufbringrichtung relativ zum elastischen Innenelement durch den Anschlag verhindert wird.

Falls das elastische Innenelement ein Klemmring ist, so weist das elastische Innenelement vorzugsweise einen Aussenmantel auf. Unabhängig davon, ob dabei auf dem Aussenmantel ein Anschlag angeordnet ist oder nicht, weist das elastische Innenelement zudem vorzugsweise auf seinem Aussenmantel einen Haltering auf, wobei ein Aussendurchmesser des Halterings bevorzugt grösser als der Durchmesser der in Axialrichtung des Aussenrings durch den Aussenring durchgehenden Öffnung zur Aufnahme des elastischen Innenelements sowie des Schafts des Schaftwerkzeugs an einer Stelle des Aussenrings ist, an welcher im auf den Schaft des Schaftwerkzeugs gesteckten und in Axialrichtung des Identifikationselements festgesetzten Zustand des Identifikationselements der Haltering den Aussenring berührt.

Dies hat den Vorteil, dass im auf den Schaft des Schaftwerkzeugs aufgesteckten und in Axialrichtung festgesetzten Zustand des Identifikationselements der Haltering vom Aussenring zusammengepresst wird, wodurch das elastische Innenelement deformiert wird und auf dem Schaft des Schaftwerkzeugs in Axialrichtung des elastischen Innenelements festgesetzt wird. Vorteilhafterweise ist dabei der Aussendurchmesser des Halterings grösser als in Axialrichtung des elastischen Innenelements an den Haltering anschliessende Bereiche des Aussenmantels. Dies hat den Vorteil, dass der Aussenring durch den Haltering optimal auf dem elastischen Innenelement gehalten werden kann, wenn der Aussenring mit seiner Axialrichtung koaxial zur Axialrichtung des elastischen Innenelements auf das elastische Innenelement aufgebracht, insbesondere geschoben, ist, weil ein Einrasten des Aussenrings auf dem Haltering ermöglicht wird. In einer Variante dazu besteht aber auch die Möglichkeit, dass sich der Haltering in Axialrichtung des elastischen Innenelements gesehen über das gesamte elastische Innenelement erstreckt oder dass das elastische Innenelement nebst dem Haltering noch den vorgehend erwähnten Anschlag aufweist, welcher einen grösseren Durchmesser als der Haltering aufweisen kann.

In einer bevorzugten Variante, in welcher auf dem Aussenmantel des elastischen Innenelements ein Anschlag angeordnet ist und das elastische Innenelement auf seinem Aussenmantel einen Haltering aufweist, ist der Haltering in Axialrichtung des elastischen Innenelements in einem Bereich eines ersten Endes des Aussenmantels angeordnet, während der Anschlag in Axialrichtung des elastischen Innenelements in einem Bereich eines dem ersten Endes des Aussenmantel gegenüberliegend angeordneten, zweiten Ende des Aussenmantels anordnet ist. Bevorzugt ist dabei der Aussenring über den Haltering bis zum Anschlag auf das elastische Innenelement aufbringbar bzw. aufschiebbar oder aufschraubbar und auf dem elastischen Innenelement zwischen dem Anschlag und dem Haltering verrastbar. Dies hat den Vorteil, dass der Aussenring auf einfache Art und Weise auf dem elastischen Innenelement festsetzbar ist.

Besonders bevorzugt ist der Anschlag auf dem Aussenmantel des elastischen Innenelements ein Anschlagsring. Falls das elastische Innenelement zudem einen Haltering aufweist, so weist der Anschlagsring bevorzugt einen grösseren Aussendurchmesser als der Aussendurchmesser des Halterings auf. In einer besonders bevorzugten Variante dient der Anschlagsring zugleich als Abdichtung für das Gehäuse.

In einer Variante dazu kann der Anschlag des elastischen Innenelements auch nicht als Anschlagsring und somit nicht um das elastische Innenelement umlaufend ausgebildet sein.

Alternativ zu diesen Varianten besteht auch die Möglichkeit, dass das elastische Innenelement weder einen Haltering noch einen Anschlag aufweist.

Vorteilhafterweise bildet der Aussenring ein Gehäuse des Identifikationselements. Dabei ist unerheblich, ob der ganze Aussenring das Gehäuse gebildet oder ob nur ein Bestandteil des Aussenrings das Gehäuse bildet. So kann beispielsweise der Aussenring eine tragende Struktur aufweisen, welche aussen vom Gehäuse umspannt ist. In diesem Fall kann die tragende Struktur aus einem gleichen Material wie das Gehäuse oder aus einem anderen Material als das Gehäuse gefertigt sein. Beispielsweise kann das Gehäuse aber auch selbst eine tragende Struktur bilden. In beiden Fällen kann die tragende Struktur Zwischenräume aufweisen, in welchen weitere Elemente angeordnet sein können. Nebst solchen weiteren allenfalls vorhandenen weiteren Elementen verbleibende Zwischenräume in der tragenden Struktur können dabei mit anderen Materialien aufgefüllt sein. Auch wenn keine weiteren Elemente in den Zwischenräumen angeordnet sind, können die Zwischenräume in der tragenden Struktur mit anderen Materialien aufgefüllt sein. Alternativ dazu besteht aber auch die Möglichkeit, dass keine solchen Zwischenräume vorhanden sind. In diesem Fall bildet der ganze Aussenring das Gehäuse des Identifil<ationselements bzw. ist der Aussenring das Gehäuse des Identifikationselements.

Indem der Aussenring das Gehäuse des Identifil<ationselements bildet, wird der Vorteil erreicht, dass durch den Aussenring das elastische Innenelement geschützt werden kann. Insbesondere kann dabei durch eine geeignete Wahl des Materials, aus welchem das Gehäuse gefertigt ist, das Identifikationselement vor einem Spanbeschlag und Einflüssen von Kühlschmierstoff sowie erhöhten Temperaturen von bis mindestens 150°C geschützt werden. Dadurch ist das Identifikationselement für den Einsatz bei spanenden Schaftwerkzeugen unter Bedingungen, wie sie in der industriellen Fertigung auftreten, besonders gut geeignet. Hierzu sollte das Material, aus welchem das Gehäuse gefertigt ist, bevorzugt einem Spanbeschlag und Einflüssen von Kühlschmierstoff sowie erhöhten Temperaturen von bis mindestens 150°C widerstehen können.

Alternativ dazu besteht aber auch die Möglichkeit, dass der Aussenring kein Gehäuse bildet.

Falls der Aussenring ein Gehäuse des Identifil<ationselements bildet, so ist das Gehäuse vorzugsweise aus einem duroplastischen Material gefertigt. Ein duroplastisches Material ist dabei bevorzugt ein Kunststoff, der nach seiner Aushärtung nicht mehr durch Erwärmung oder andere Massnahmen verformt werden kann.

In einer bevorzugten Variante ist ein duroplastisches Material ein gehärtetes Kunstharz. In einer weiteren bevorzugten Variante ist das duroplastische Material ein glasfaserverstärkter Kunststoff. Unabhängig davon, ob das duroplastische Material dabei ein gehärtetes Kunstharz umfasst oder nicht, enthält das duroplastische Material in der Form eines glasfaserverstärkten Kunststoffs bevorzugt einen Gewichtsanteil Glasfasern von mehr als 10%, besonders bevorzugt mehr 40%. Weiter enthält das duroplastische Material in der Form eines glasfaserverstärkten Kunststoffs bevorzugt Polyphenylensulfid (PPS), welches ein hochtemperaturbeständiger thermoplastischer Kunststoff ist. Das duroplastische Material kann aber auch ohne Polyphenylensulfid (PPS) auskommen. Falls das duroplastische Material Polyphenylensulfid (PPS) enthält und ein glasfaserverstärkter Kunststoff ist, so liegt der Gewichtsanteil Glasfasern bevorzugt bei etwa 15%. In einer Variante kann das duroplastische Material aber auch ohne Glasfasern auskommen. In diesem Fall ist das duroplastische Material kein glasfaserverstärkter Kunststoff.

Alternativ zu diesen Varianten ist das Gehäuse nicht aus einem duroplastischen Material, sondern aus einem anderen Material gefertigt. Beispielswiese kann das Gehäuse aus Metall gefertigt sein.

Unabhängig davon, ob der Aussenring ein Gehäuse bildet oder nicht und ob das allenfalls vorhandene Gehäuse aus einem duroplastischen Material gefertigt ist oder nicht, weist der Aussenring einen seiner durchgehenden Öffnung zugewandten und seine durchgehende Öffnung abgrenzenden Innenmantel auf, welcher eine Wellenstruktur zur Erhöhung von Haltekräften aufweist, welche Haltekräfte zwischen dem Aussenring und dem elastischen Innenelement auftreten, wenn das elastische Innenelement in der Öffnung des Aussenrings aufgenommen ist. Vorteilhafterweise befindet sich dabei der Innenmantel auf der Innenseite der in Axialrichtung des Aussenrings durch den Aussenring verlaufenden, durchgehenden Öffnung.

Falls das elastische Innenelement ein Ring ist, so treten die vorgenannten Haltekräfte vorzugsweise dann auf, wenn das elastische Innenelement derart zum Aussenring ausgerichtet in der Öffnung des Aussenrings aufgenommen ist, dass die Axialrichtung des elastischen Innenelements und die Axialrichtung des Aussenrings koaxial zueinander angeordnet sind.

Die Wellenstruktur des Innenmantels des Aussenrings hat den Vorteil, dass der Aussenring auf einfache Art und Weise auf dem elastischen Innenelement in Axialrichtung festgesetzt werden kann. Zudem hat die Wellenstruktur im Falle eines als Klemmring ausgebildeten elastischen Innenelements den Vorteil, dass aufgrund der Wellenstruktur die Krafteinwirkung zum Festsetzen des Identifil<ationselements in seiner Axialrichtung auf dem Schaft des Schaftwerkzeugs besonders einfach durch Aufbringen, insbesondere Aufschieben des Aussenrings auf das auf den Schaft des Schaftwerkzeugs aufgesteckte elastische Innenelement erzeugt werden kann.

Der Aussenring weist einen seiner durchgehenden Öffnung zugewandten und seine durchgehende Öffnung abgrenzenden Innenmantel auf, welcher eine Wellenstruktur zur Erhöhung von Haltekräften aufweist, welche Haltekräfte zwischen dem Aussenring und dem elastischen Innenelement auftreten, wenn das elastische Innenelement in der Öffnung des Aussenrings aufgenommen ist. Die Wellenstruktur weist eine Amplitude im Bereich von 0.02 mm bis 0.1 mm, besonders bevorzugt eine Amplitude von etwa 0.05 mm auf. Dies hat den Vorteil, dass der Aussenring auf einfache Art und Weise auf dem elastischen Innenelement in Axialrichtung festgesetzt und im Bedarfsfall wieder vom elastischen Innenelement entfernt werden kann. In einem nicht erfindungsgemäßen Ausführungsbeispiel besteht alternativ dazu aber auch die Möglichkeit, dass die Wellenstruktur eine Amplitude von weniger als 0.02 mm oder aber mehr als 0.1 mm auf weist.

Weiter weist die Wellenstruktur bevorzugt eine Periodenlänge im Bereich von etwa 0.7 mm bis etwa 1.1 mm, besonders bevorzugt eine Periodenlänge von etwa 0.9 mm auf. Dies hat den Vorteil, dass eine gute Haftung des Aussenrings auf dem elastischen Innenelement erreicht werden kann. Alternativ dazu besteht aber auch die Möglichkeit, dass die Periodenlänge der Wellenstruktur weniger als etwa 0.7 mm oder mehr als etwa 1.1 mm beträgt.

In einem nicht erfindungsgemäßen Ausführungsbeispiel besteht alternativ diesen Varianten auch die Möglichkeit, dass der Aussenring keinen seiner durchgehenden Öffnung zugewandten und seine durchgehende Öffnung abgrenzenden Innenmantel aufweist, welcher eine Wellenstruktur zur Erhöhung von Haltekräften aufweist, welche Haltekräfte zwischen dem Aussenring und dem elastischen Innenelement auftreten, wenn das elastische Innenelement in der Öffnung des Aussenrings aufgenommen ist.

Bevorzugt weist der Aussenring einen um die in seine Axialrichtung durchgehende Öffnung im Aussenring umlaufenden Innenraum auf. Dies hat den Vorteil, dass in diesem Innenraum weitere Elemente des Aussenrings angeordnet werden können. Bevorzugt ist dieser Innenraum durch eine tragende Struktur und/oder durch ein allenfalls durch den Aussenring gebildetes Gehäuse von einer den Aussenring umgebenden Umgebung abgegrenzt. Entsprechend handelt es sich bei diesem Innenraum bevorzugt um die bereits vorgehend im Zusammenhang mit dem vorteilhafterweise durch den Aussenring gebildeten Gehäuse erwähnten Zwischenräume. Der Innenraum des Aussenrings kann dabei leer sein. Er kann aber auch weitere Elemente des Aussenrings enthalten. Unabhängig davon, ob der Innenraum weitere Elemente des Aussenrings enthält oder nicht, kann der Innenraum abgesehen von den allenfalls vorhandenen weiteren Elementen leer sein oder mit einem Füllmaterial aufgefüllt sein. Falls der Innenraum mit einem Füllmaterial aufgefüllt ist, so ist das Füllmaterial bevorzugt eine Vergussmasse, welche die allenfalls im Innenraum angeordneten, weiteren Elemente des Aussenrings an ihrer Position hält.

Vorzugsweise weist das Identifikationselement ein Drahtloskommunikationsmittel zum Übermitteln des Identifikators in der Form eines digitalen kennzeichnenden, insbesondere eindeutig kennzeichnenden Codes auf. In einer bevorzugten Variante ist das Drahtloskommunikationsmittel ein RFID-Transponder mit einer Antenne zum Übermitteln des Identifikators mittels elektromagnetischer Wellen. In einer weiteren bevorzugten Variante ist das Drahtloskommunikationsmittel ein Bluetooth-Element zum Übermitteln des Identifikators. Das Drahtloskommunikationsmittel kann aber auch ein anderes Drahtloskommunikationsmittel als ein RFID-Transponder mit einer Antenne oder einem Bluetooth-Element sein.

Alternativ zu diesen Varianten besteht aber auch die Möglichkeit, dass das Identifikationselement kein Drahtloskommunikationsmittel zum Übermitteln des Identifikators aufweist.

Vorzugsweise umfasst das Identifikationselement einen RFID-Transponder, welcher den Identifikator in der Form eines digitalen kennzeichnenden, insbesondere eindeutig kennzeichnenden Codes enthält. Zudem umfasst das Identifikationselement bevorzugt eine mit dem RFID-Transponder verbundene Antenne zur Übermittlung des Identifikators mittels elektromagnetischer Wellen. Dabei ist RFID die Abkürzung der englischen Bezeichnung "radio-frequency identification", was soviel wie "Identifizierung mit Hilfe elektromagnetischer Wellen" bedeutet. Der RFID-Transponder ist vorzugsweise ein Chip.

Dabei besteht die Möglichkeit, dass die Antenne in den Chip integriert ist oder dass die Antenne mit dem Chip verbunden ist. Es besteht aber auch die Möglichkeit, dass der RFID-Transponder nicht ein Chip ist.

Vorzugsweise ist durch den RFID-Transponder der Identifikator nur auf Abruf übermittelbar. Ein Auslesen des RFID-Transponders und des digitalen, kennzeichnenden Codes erfolgt dabei bevorzugt durch hochfrequente Radiowellen, besonders bevorzugt jedoch durch vom Lesegerät erzeugte elektromagnetische Wellen mit geringer Reichweite. Durch diese Wellen mit geringer Reichweite sind bevorzugt nicht nur die Daten übertragbar, sondern auch der RFID-Transponder mit Energie versorgbar. Falls das Auslesen des RFID-Transponders hingegen durch hochfrequente Radiowellen erfolgt, so umfasst das Identifikationselement, insbesondere der Aussenring, bevorzugt eine Stromquelle für den RFID-Transponder. Diese Stromquelle kann beispielsweise eine Batterie oder ein wiederaufladbarer Akkumulator sein.

Wenn das Identifikationselement wie vorgenannt einen RFID-Transponder und eine mit dem RFID-Transponder verbundene Antenne zur Übermittlung des Identifikators mittels elektromagnetischer Wellen umfasst, so umfasst das Identifikationselement vorteilhafterweise zudem einen Beschleunigungssensor zum Erfassen von Beschleunigungsdaten, wobei die durch den Beschleunigungssensor erfassten Beschleunigungsdaten durch den RFID-Transponder und die mit dem RFID-Transponder verbundene Antenne mittels elektromagnetische Wellen übermittelbar sind, und/oder einen Temperatursensor zum Erfassen von Temperaturdaten einer Temperatur am Ort des Temperatursensors, wobei die durch den Temperatursensor erfassten Temperaturdaten durch den RFID-Transponder und die mit dem RFID-Transponder verbundene Antenne mittels elektromagnetische Wellen übermittelbar sind. Dabei kann das Identifikationselement nur einen solchen Beschleunigungssensor, nur einen solchen Temperatursensor, oder aber sowohl einen solchen Beschleunigungssensor als auch einen solchen Temperatursensor umfassen.

Der Beschleunigungssensor hat den Vorteil, dass die am Schaft des Schaftwerkzeugs nahe bei den Schneiden des Schaftwerkzeugs auftretende Beschleunigungen erfasst werden können. Dies ermöglicht eine sehr sensitive Erkennung der Werkzeugschwingungen des Schaftwerkzeugs, wenn das Identifikationselement auf dem Schaftwerkzeug in seine Axialrichtung festgesetzt ist. Dadurch wird eine schnelle und präzise Anpassung der Drehzahl und der Eingriffsbedingungen des Schaftwerkzeugs während der Bearbeitung eines Werkstücks ermöglicht. Somit können Werkzeugschwingungen, welche einen negativen Einfluss auf die mit dem Schaftwerkzeug zu erzeugende Oberfläche haben oder das Schaftwerkzeug beschädigen können, verhindert werden. Zudem hat der Beschleunigungssensor den Vorteil, dass ermittelt werden kann, wann das Schaftwerkzeug mit dem zu bearbeitenden Werkstück in Eingriff kommt und wieviel Zeit das Schaftwerkzeug mit dem zu bearbeitenden Werkstück im Eingriff ist. Unproduktive Zeiten wie Luftschnitte können daher präzise ermittelt werden und die Effizienz des Bearbeitungsprozesses kann deutlich gesteigert werden.

Bevorzugt ist der Beschleunigungssensor auf einem gleichen Chip wie der RFID-Transponder angeordnet. Alternativ dazu besteht aber auch die Möglichkeit, dass der Beschleunigungssensor auf einem anderen Chip als der RFID-Transponder angeordnet ist oder auf gar keinem Chip angeordnet ist.

Der Temperatursensor hat den Vorteil, dass am Schaft des Schaftwerkzeugs nahe bei den Schneiden des Schaftwerkzeugs herrschende Temperaturen erfasst werden können. Dadurch können auf einfache Art und Weise Informationen über die Eingriffsbedingungen des Werkzeugs sowie über den Werkzeugverschleiss erlangt werden.

Bevorzugt ist der Temperatursensor auf einem gleichen Chip wie der RFID-Transponder sowie der allenfalls vorhandene Beschleunigungssensor angeordnet. Alternativ dazu besteht aber auch die Möglichkeit, dass der Temperatursensor auf einem anderen Chip als der RFID-Transponder angeordnet ist oder auf gar keinem Chip angeordnet ist.

Alternativ zu diesen Varianten besteht auch die Möglichkeit, dass das Identifikationselement weder einen Beschleunigungssensor noch einen Temperatursensor umfasst.

Vorzugsweise umfasst das Identifikationselement ein Datenspeicherelement, insbesondere einen Datenspeicherchip, zum Speichern von Zustandsdaten zu einsatzspezifischen Zuständen des Schaftwerkzeugs, wobei die Zustandsdaten durch den RFID-Transponder und die mit dem RFID-Transponder verbundene Antenne mittels elektromagnetische Wellen übermittelbar sind.

Wenn dabei das Identifikationselement den zuvor erwähnten Beschleunigungssensor zum Erfassen von Beschleunigungsdaten umfasst, so sind die Beschleunigungsdaten bevorzugt im Datenspeicherelement bzw. Datenspeicherchip speicherbare Zustandsdaten. Es besteht aber auch die Möglichkeit, dass die Beschleunigungsdaten nicht im Datenspeicherelement bzw. Datenspeicherchip speicherbar sind.

Wenn dabei das Identifikationselement den zuvor erwähnten Temperatursensor zum Erfassen von Temperaturdaten einer Temperatur am Ort des Temperatursensors umfasst, so sind die Temperaturdaten bevorzugt im Datenspeicherelement bzw. Datenspeicherchip speicherbare Zustandsdaten. Es besteht aber auch die Möglichkeit, dass die Temperaturdaten nicht im Datenspeicherelement bzw. Datenspeicherchip speicherbar sind.

Abgesehen von den erwähnten Beschleunigungsdaten und Temperaturdaten können die Zustandsdaten auch weitere, von anderen Sensoren erfasste Daten umfassen oder können auch von einem Schreibgerät via den RFID-Transponder an das Identifikationselement übermittelte Daten sein. Solche übermittelte Daten können beispielsweise die Anzahl Gebrauche oder die Gesamtgebrauchszeit des Schaftwerkzeugs umfassen.

Bevorzugt ist das Datenspeicherelement bzw. der Datenspeicherchip auf einem gleichen Chip wie der RFID-Transponder angeordnet bzw. in diesen gleichen Chip integriert. Alternativ dazu besteht aber auch die Möglichkeit, dass das Datenspeicherelement bzw. der Datenspeicherchip auf einem anderen Chip als der RFID-Transponder angeordnet ist oder auf gar keinem Chip angeordnet ist.

Alternativ zu diesen Varianten besteht auch die Möglichkeit, dass das Identifikationselement kein solches Datenspeicherelement aufweist.

Wenn der Aussenring einen um die in Axialrichtung durchgehende Öffnung im Aussenring umlaufenden Innenraum aufweist und das Identifikationselement den vorgenannten RFID-Transponder umfasst, so ist der RFID-Transponder vorteilhafterweise im Innenraum des Aussenrings angeordnet. Dies hat den Vorteil, dass der RFID-Transponder optimal von äusseren Einflüssen geschützt werden kann. Damit ist der RFID-Transponder ein vorgehend erwähntes weiteres Element des Aussenrings, welches im Innenraum des Aussenrings angeordnet ist. Alternativ dazu besteht aber auch die Möglichkeit, dass der RFID-Transponder woanders, ausserhalb des Innenraums des Aussenrings, angeordnet ist. So kann der RFID-Transponder beispielsweise aussen auf dem Aussenring oder im oder auf dem elastischen Innenelement angeordnet sein.

Falls das Identifikationselement einen Beschleunigungssensor zum Erfassen von Beschleunigungsdaten umfasst, so ist der Beschleunigungssensor bevorzugt im Innenraum des Aussenrings angeordnet. Damit ist der Beschleunigungssensor ein vorgehend erwähntes weiteres Element des Aussenrings, welches im Innenraum des Aussenrings angeordnet ist. Der Beschleunigungssensor kann aber auch woanders, ausserhalb des Innenraums des Aussenrings, angeordnet sein. So kann der Beschleunigungssensor beispielsweise aussen auf dem Aussenring oder im oder auf dem elastischen Innenelement angeordnet sein.

Falls das Identifikationselement einen Temperatursensor zum Erfassen von Temperaturdaten einer Temperatur am Ort des Temperatursensors umfasst, so ist der Temperatursensor bevorzugt im Innenraum des Aussenrings angeordnet. Damit ist der Temperatursensor ein vorgehend erwähntes weiteres Element des Aussenrings, welches im Innenraum des Aussenrings angeordnet ist. Der Temperatursensor kann aber auch woanders, ausserhalb des Innenraums des Aussenrings, angeordnet sein. So kann der Temperatursensor beispielsweise aussen auf dem Aussenring oder im oder auf dem elastischen Innenelement angeordnet sein.

Wenn das Identifikationselement den vorgenannten RFID-Transponder umfasst und dieser RFID-Transponder im Innenraum des Aussenrings angeordnet ist, so ist bevorzugt im Innenraum des Aussenrings dem RFID-Transponder radial gegenüberliegend ein Ausgleichsgewicht angeordnet. Falls das Identifikationselement den RFID-Transponder sowie entweder den erwähnten Beschleunigungssensor oder den erwähnten Temperatursensor aufweist, so ist das Ausgleichsgewicht bevorzugt durch den Beschleunigungssensor bzw. den Temperatursensor gebildet.

Unabhängig davon, ob das Identifikationselement als Elektronikkomponenten nur den RFID-Transponder mit einer allenfalls vorhandenen Stromquelle und die Antenne umfasst, ob das Identifikationselement als Elektronikkomponenten nur den RFID-Transponder mit einer allenfalls vorhandenen Stromquelle, die Antenne und den Beschleunigungssensor umfasst, ob das Identifikationselement als Elektronikkomponenten nur den RFID-Transponder mit einer allenfalls vorhandenen Stromquelle, die Antenne und den Temperatursensor umfasst, ob das Identifikationselement als Elektronikkomponenten nur den RFID-Transponder mit einer allenfalls vorhandenen Stromquelle, die Antenne, den Beschleunigungssensor und den Temperatursensor umfasst, oder ob das Identifil<ationselement als Elektronikkomponenten den RFID-Transponder mit einer allenfalls vorhandenen Stromquelle, die Antenne, den Beschleunigungssensor und den Temperatursensor sowie weitere Elektronikkomponenten umfasst, sind die Elektronikkomponenten und damit die bereits vorgehend erwähnten weiteren Elements des Aussenrings bevorzugt gewichtssymmetrisch um die in Axialrichtung des Aussenrings durchgehende Öffnung im Aussenring im Innenraum des Aussenrings angeordnet, um eine Unwucht des Identifikationselements zu verhindern, wenn das Identifikationselement auf dem Schaft des Schaftwerkzeugs aufgesteckt und in seine Axialrichtung festsetzt ist und das Schaftwerkzeug um eine Längsachse seines Schafts rotiert wird.

Alternativ dazu besteht aber auch die Möglichkeit, dass die Elektronikkomponenten bzw. die weiteren Elemente des Aussenrings nicht gewichtssymmetrisch um die in Axialrichtung durchgehende Öffnung im Aussenring im Innenraum des Aussenrings angeordnet sind. Auch besteht die Möglichkeit, dass im Innenraum des Aussenrings dem RFID-Transponder radial gegenüberliegend kein Ausgleichsgewicht angeordnet ist.

Wenn der Aussenring einen um die in Axialrichtung durchgehende Öffnung im Aussenring umlaufenden Innenraum aufweist und das Identifikationselement den vorgenannten RFID-Transponder sowie die vorgenannte Antenne umfasst, so ist die Antenne vorteilhafterweise eine ringförmige Antenne, welche im Innenraum des Aussenrings angeordnet ist und um die in Axialrichtung des Aussenrings durch den Aussenring durchgehende Öffnung zur Aufnahme des elastischen Innenelements sowie des Schafts des Schaftwerkzeugs verläuft. Somit ist die Antenne ein vorgehend erwähntes weiteres Element des Aussenrings, welches im Innenraum des Aussenrings angeordnet ist. Dabei ist nicht unerheblich, ob der RFID-Transponder ebenfalls im Innenraum des Aussenrings angeordnet ist oder nicht.

Die ringförmige Antenne mit ihrer um die Öffnung im Aussenring umlaufenden Anordnung im Innenraum des Aussenrings hat den Vorteil, dass eine Unwucht des Identifikationselements minimiert wird, wenn das Identifikationselement auf dem Schaft des Schaftwerkzeugs aufgesteckt und in seine Axialrichtung festgesetzt ist und das Schaftwerkzeug um die Längsachse seines Schafts rotiert wird

Alternativ dazu besteht auch die Möglichkeit, dass die ringförmige Antenne nicht um die Öffnung im Aussenring umlaufend im Innenraum des Aussenrings angeordnet ist, oder das die Antenne keine ringförmige Antenne ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines erfindungsgemässen Identifikationselements, welches auf den Schaft eines spanenden Schaftwerkzeugs aufgesteckt ist und einen Identifikator zur Identifikation des Schaftwerkzeugs aufweist, sowie ein Auslesegerät zum Auslesen des Identifikationselements bzw. des Identifikators,
- Fig. 2: eine schematische Darstellung eines erfindungsgemässen Identifikationselements in einem Zustand, in welchem das Identifikationselement vom in Figur 1 gezeigten Schaftwerkzeug abgenommen ist, wodurch erkennbar ist, dass das Identifikationselement eine zweiteilige Ringhülse mit einem elastischen Innenelement und einem Aussenring ist,
- Fig. 3a, b: eine schematische Darstellung des elastischen Innenelements bzw. des Aussenrings,
- Fig. 4: eine schematische Darstellung eines Gehäuses des Aussenrings aus der gleichen Perspektive wie der Aussenring in Figur 3b gezeigt ist, wobei aber ein Innenraum des Aussenrings nicht mit einer Vergussmasse aufgefüllt ist,
- Fig. 5a, b: eine Schnittdarstellung des Aussenrings entlang einer Ebene, in welcher eine Mittelachse und damit ein Axialrichtung des Aussenrings 4 liegen, sowie eine Aufsicht von oben entlang der Axialrichtung auf den Aussenring, wobei die Vergussmasse nicht gezeigt ist, und
- Fig. 6a, b: analog zu den Figuren 5a und 5b je eine Ansicht eines Aussenrings 64 eines weiteren erfindungsgemässen Identifikationselements.

Grundsätzlich sind in den Figuren gleiche Teile mit gleichen Bezugszeichen versehen.

### Wege zur Ausführung der Erfindung

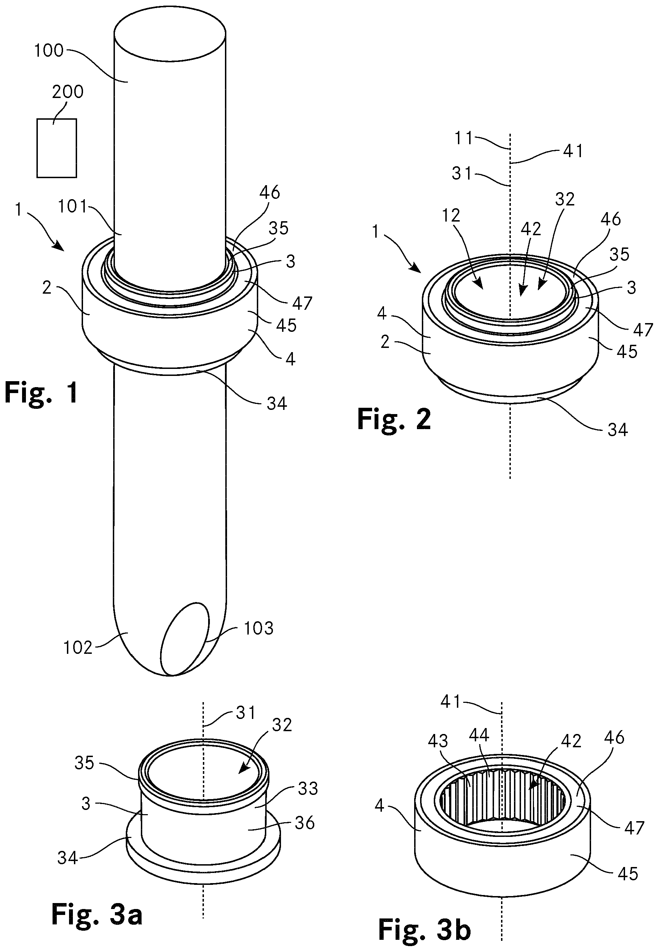

Figur 1 zeigt eine schematische Darstellung eines erfindungsgemässen Identifikationselements 1, welches auf den Schaft 101 eines spanenden Schaftwerkzeugs 100 aufgesteckt ist und einen Identifikator 13 zur Identifikation des Schaftwerkzeugs 100 aufweist, sowie ein Auslesegerät 200 zum Auslesen des Identifikationselements 1 bzw. des Identifikators 13. Im vorliegenden Beispiel ist das spanende Schaftwerkzeug 100 ein Schaftfräser, welcher einen Kugelkopf 102 mit einer Schneidkante 103 aufweist. In Varianten dazu kann das Schaftwerkzeug 100 aber auch ein anderer Schaftfräser als ein Kugelkopf-Schaftfräser sein. Genauso kann das Schaftwerkzeug 100 aber auch ein Bohrer sein. Im vorliegend gezeigten Beispiel weist der Schaft 101 des Schaftwerkzeugs 100 einen Schaftdurchmesser von 11 mm auf. Dieser Schaftdurchmesser kann aber auch grösser oder kleiner sein. Beispielsweise kann er 3 mm, 5 mm, 10 mm oder 20 mm sein.

Das Identifikationselement 1 ist in einer Orientierung mit seiner Axialrichtung 11 (siehe Figur 2) parallel zum Schaft 101 des Schaftwerkzeugs 100 ausgerichtet auf den Schaft 101 des Schaftwerkzeugs 100 aufbringbar und auf dem Schaft 101 in eine Axialrichtung 11 des Identifikationselements 1 (siehe Figur 2) festsetzbar. Zudem ist das Identifikationselement 1 wieder vom Schaft 101 abnehmbar. Damit ist das Identifikationselement 1 aufsteckbar und wieder abnehmbar.

Figur 2 zeigt eine schematische Darstellung eines erfindungsgemässen Identifikationselements 1 in einem Zustand, in welchem das Identifikationselement 1 vom in Figur 1 gezeigten Schaftwerkzeug 100 abgenommen ist. Deshalb ist das Schaftwerkzeug 100 in Figur 2 nicht gezeigt. Dafür ist in Figur 2 die Axialrichtung 11 des Identifikationselements 1 durch eine gestrichelte Linie dargestellt. Zudem ist in Figur 2 zu erkennen, dass das Identifikationselement 1 eine in seine Axialrichtung 11 durchgehende Öffnung 12 aufweist. Dadurch ist zu erkennen, dass das Identifikationselement 1 eine entlang seiner Axialrichtung 11 gemessene eine Höhe aufweist, welche kleiner ist als der Durchmesser einer in die Axialrichtung 11 des Identifikationselements 1 durchgehende Öffnung 12 im Identifikationselement 1 zur Aufnahme des Schafts 101 des Schaftwerkzeugs 100 im Identifikationselement 1, wenn das Identifikationselement 1 zusammengesetzt ist, d.h. wenn der Aussenring 4 mit seiner Axialrichtung 41 koaxial zur Axialrichtung 31 des elastischen Innenelements 3 ausgerichtet auf das elastische Innenelement 3 aufgebracht ist und der Durchmesser der Öffnung 12 im Identifikationselement 1 in eine senkrecht zur Axialrichtung 11 des Identifikationselements 1 ausgerichtete Radialrichtung gemessen wird.

Das Identifikationselement 1 ist eine zweiteilige Ringhülse 2, welche als erstes Teil ein elastisches Innenelement 3 und als zweites Teil einen auf das elastische Innenelement 3 aufbringbaren Aussenring 4 aufweist. In den Figuren 1 und 2 ist der Aussenring 4 mit seiner Axialrichtung 41 koaxial zu einer Axialrichtung 31 des elastischen Innenelements 3 ausgerichtet auf das elastische Innenelement 3 aufgebracht dargestellt. In den Figuren 3a und 3b hingegen sind das elastische Innenelement 3 und der Aussenring 4 separat voneinander dargestellt, wobei in Figur 3a das elastische Innenelement 3 gezeigt ist, während in Figur 3b der Aussenring 4 gezeigt ist.

Wie in Figur 3a ersichtlich, ist das elastische Innenelement 3 ein elastischer Innenring und weist eine in seine Axialrichtung 31 durchgehende Öffnung 32 zur Aufnahme des Schafts 101 des Schaftwerkzeugs 100 auf. In Figur 3a ist die Axialrichtung 31 des elastischen Innenelements 3 durch eine gestrichelte Linie dargestellt.

Die Öffnung 32 des elastischen Innenelements 3 weist einen Durchmesser auf, welcher im Wesentlichen dem Schaftdurchmesser des Schafts 101 des Schaftwerkzeugs 100 entspricht. Im vorliegenden Fall ist der Durchmesser der Öffnung 32 des elastischen Innenelements 3 geringfügigst kleiner als der Schaftdurchmesser des Schafts 101 des Schaftwerkzeugs 100, sodass das elastische Innenelement 3 mit seiner Axialrichtung 31 parallel zum Schaft 101 des Schaftwerkzeugs 100 mit der Öffnung 32 des elastischen Innenelements 3 mit leichtem Widerstand über den Schaft 101 des Schaftwerkzeugs 100 geschoben werden kann.

Das elastische Innenelement 3 ist aus einem elastischen Material gefertigt. Im vorliegenden Beispiel ist das elastische Innenelement 3 aus einem Elastomer gefertigt, was ein elastisch verformbarer Kunststoff ist, dessen Glasübergangspunkt sich unterhalb der Einsatztemperatur, besonders bevorzugt unterhalb der Raumtemperatur befindet. Im vorliegenden Beispiel ist das elastische Innenelement 3 aus einem Elastomer gefertigt, welcher derzeit BASF unter der Marke Elastollan^{®} unter der Bezeichnung C 65 A HPM vertrieben wird. Dieser Elastomer weist eine Shorehärte von 65 A auf. In Varianten dazu kann das elastische Innenelement 3 aber auch aus einem anderen Elastomer gefertigt sein oder anstelle von aus einem Elastomer aus einem anderen elastischen Material oder gar aus einem nicht-elastischen Material gefertigt sein. Falls das elastische Innenelement 3 aus einem elastischen Material gefertigt ist, so ist das elastische Material in einer ersten Variante ein Material mit einem Elastizitätsmodul *E* von höchstens 10 GPa. In einer zweiten Variante ist das elastische Material ein Material mit einem Elastizitätsmodul E von höchstens 5 GPa. In einer dritten Variante ist das elastische Material ein Material mit einem Elastizitätsmodul *E* von höchstens 1 GPa. In einer nicht erfindungsgemäßen vierten Variante ist das elastische

Material ein Material mit einem Elastizitätsmodul *E* von mehr als 10 GPa. In einem Beispiel der vierten Variante ist das elastische Material ein Material mit einem Elastizitätsmodul E von etwa 20 GPa.

Wie in Figur 3a ersichtlich, weist das elastische Innenelement 3 einen Aussenmantel 33 auf. Auf diesem Aussenmantel 33 ist einen Haltering 35 angeordnet, wobei ein Aussendurchmesser des Halterings 35 etwas grösser als der Durchmesser der in Axialrichtung 41 des Aussenrings 4 durch den Aussenring 4 durchgehenden Öffnung 42 zur Aufnahme des elastischen Innenelements 3 sowie des Schafts 101 des Schaftwerkzeugs 100 an einer Stelle des Aussenrings 4 ist, an welcher im auf den Schaft 101 des Schaftwerkzeugs 100 aufgesteckten und in seine Axialrichtung festgesetzten Zustand des Identifikationselements 1 der Haltering 35 den Aussenring 4 berührt. Dabei ist der Haltering 35 in einem Bereich eines ersten Endes des Aussenmantels 33 angeordnet. Dieses erste Ende des Aussenmantels 33 befindet sich in den Darstellungen der Figuren 1, 2 und 3a oben.

Auf dem Aussenmantel 33 ist weiter ein Anschlagsring 34 angeordnet, an welchem der Aussenring 4 anschlägt, wenn der Aussenring 4 mit seiner Axialrichtung 41 koaxial zur Axialrichtung 31 des elastischen Innenelements 3 ausgerichtet mit der Öffnung 42 des Aussenrings 4 in eine in seine Axialrichtung 41 zeigende Aufbringrichtung über das elastische Innenelement 3 geschoben wird, sodass eine Weiterbewegung des Aussenrings 4 in die Aufbringrichtung relativ zum elastischen Innenelement 3 durch den Anschlagsring 34 verhindert wird. Dabei ist ein Aussendurchmesser des Anschlagsrings 34 grösser als der Aussendurchmesser des Halterings 35. Zudem ist der Anschlagsring 34 in Axialrichtung 31 des elastischen Innenelements 3 in einem Bereich eines zweiten, dem ersten Ende des Aussenmantels 33 gegenüberliegenden Endes des Aussenmantels 33 angeordnet. In den Darstellungen der Figuren 1, 2 und 3a befindet sich dieses zweite Ende des Aussenmantels 33 unten.

Somit befindet sich der Anschlagsring 34 dem Haltering 35 gegenüberliegend auf dem Aussenmantel 33 des elastischen Innenelements 3. Ein Bereich des Aussenmantels 33, welcher sich zwischen dem Anschlagsring 34 und dem Haltering 35 befindet, wird hier als Mantelbereich 36 des elastischen Innenelements 3 bezeichnet. Dieser Mantelbereich 36 weist einen Aussendurchmesser auf, welcher kleiner als der Aussendurchmesser des Anschlagsrings 34 und auch kleiner ist als der Aussendurchmesser des Halterings 35.

Zum Aufbringen des Aussenrings 4 auf das elastische Innenelement 3 ist der Aussenring 4 über den Haltering 35 bis zum Anschlagsring 34 auf das elastische Innenelement 3 aufschiebbar und auf dem elastischen Innenelement 3 zwischen dem Anschlagsring 34 und dem Haltering 35 verrastbar. Dadurch kann der Aussenring 4 auf einfache Art und Weise auf dem elastischen Innenelement 3 festgesetzt werden.

Wie in Figur 3b ersichtlich, weist der Aussenring 4 eine in seine Axialrichtung 41 durchgehende Öffnung 42 zur Aufnahme des elastischen Innenelements 3 sowie des in die Axialrichtung 41 des Aussenrings 4 ausgerichteten Schafts 101 des Schaftwerkzeugs 100 auf. Weiter ist in Figur 3b ersichtlich, dass der Aussenring 4 einen seiner durchgehenden Öffnung 42 zugewandten und seine durchgehende Öffnung 42 abgrenzenden Innenmantel 43 aufweist. Dieser Innenmantel 43 weist eine Wellenstruktur 44 zur Erhöhung von Haltel<räften auf, welche Haltekräfte zwischen dem Aussenring 4 und dem elastischen Innenelement 3 auftreten, wenn das elastische Innenelement 3 mit seiner Axialrichtung 31 koaxial zur Axialrichtung 41 des Aussenrings 4 ausgerichtet in der Öffnung 43 des Aussenrings 4 aufgenommen ist. Dabei weist die Wellenstruktur 55 eine Sinusform mit einer Amplitude von 0.05 mm und einer Periodenlänge von 0.9 mm auf.

Wenn das elastische Innenelement 3 auf die vorgehend beschriebene Weise in der Öffnung 43 des Aussenrings 4 aufgenommen ist, so ist das Identifikationselement 1 zusammengesetzt wie in den Figuren 1 und 2 gezeigt. In diesem zusammengesetzten Zustand des Identifikationselements 1 ist der Aussenring 4 zwischen dem Anschlagsring 34 und dem Haltering 35 des Aussenmantels 3 des elastischen Innenelements 3 eingerastet. Dabei drückt der Aussenring 4 mit seiner Wellenstruktur 44 von aussen nach innen gegen den zwischen dem Anschlagsring 34 und dem Haltering 35 angeordneten Mantelbereich 36 des elastischen Innenelements 3. Dadurch ist in diesem zusammengesetzten Zustand das elastische Innenelement 3 in eine radiale Richtung, welche rechtwinklig zur Axialrichtung 31 des elastischen Innenelements 3 ausgerichtet ist, unter einer durch den Aussenring 4 bzw. die Wellenstruktur 44 bewirkten Krafteinwirkung elastisch deformiert, womit die in Axialrichtung 31 des elastischen Innenelements 3 durchgehende Öffnung 32 im Innenelement 3 etwas verengt ist. Wenn somit das elastische Innenelement 3 mit seiner in seine Axialrichtung 31 durchgehenden Öffnung 32 auf den Schaft 101 des Schaftwerkzeugs 100 aufgeschoben ist, wenn der Aussenring 4 auf das elastische Innenelement 3 geschoben und zwischen dem Anschlagsring 34 und dem Haltering 35 eingerastet wird, so ist das elastische Innenelement 3 und damit auch das Identifikationselement 1 in seine Axialrichtung 31 bzw. 11 auf dem Schaft 101 des Schaftwerkzeugs 100 in seine Axialrichtung 31 bzw. 11 festgesetzt. Aufgrund dieses Mechanismus ist das elastische Innenelement 3 ein Klemmring, genauer ein einteiliger Klemmring, welcher auf den Schaft 101 des Schaftwerkzeugs 100 klemmbar ist.

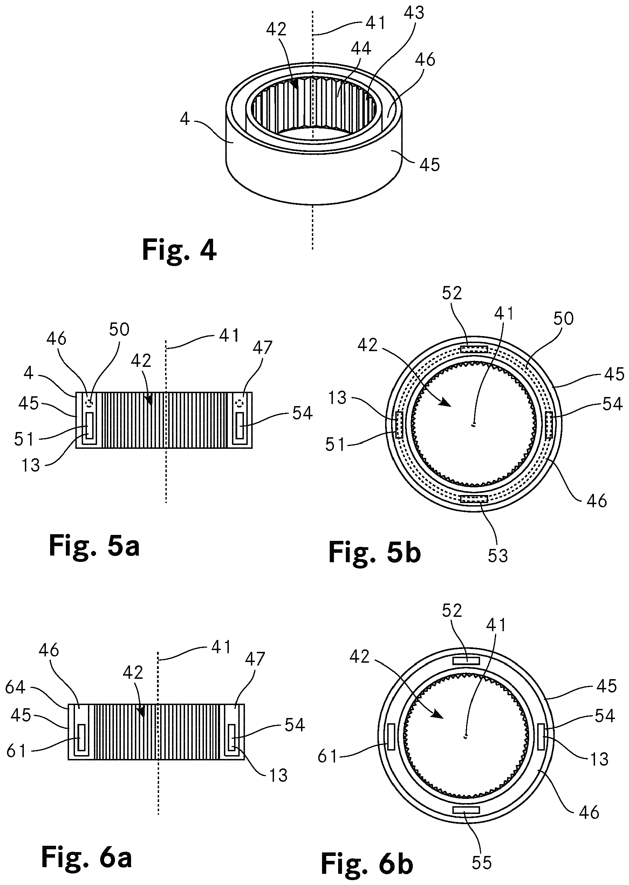

Wie in Figur 3b erkennbar, bildet der Aussenring 4 auf seiner von seiner in seine Axialrichtung 41 durchgehenden Öffnung 42 abgewandten Aussenmantelseite ein Gehäuse 45 des Identifikationselements 1. Dieses Gehäuse 45 ist zusammen mit der Wellenstruktur 45 einstückig gefertigt, wie auch im Zusammenhang mit Figur 4 genauer erläutert. Dabei sind das Gehäuse 45 und die Wellenstruktur 44 aus einem duroplastischen Material gefertigt. Dieses duroplastische Material ist glasfaserverstärkt und enthält im vorliegenden Beispiel einen Gewichtsanteil von 15% Glasfasern. Dabei sind die restlichen 85 Gewichtsprozent Polyphenylensulfid (PPS). Daher ist das Identifikationselement 1 durch das Gehäuse 45 vor einem Spanbeschlag und Einflüssen von Kühlschmierstoff sowie erhöhten Temperaturen von bis mindestens 150°C, welche beim Einsatz bei spanenden Schaftwerkzeugen unter Bedingungen, wie sie in der industriellen Fertigung auftreten, optimal geschützt. Anstelle von glasfaserverstärktem Polyphenylensulfid kann das Gehäuse 45 aber auch aus einem anderen duroplastischen Material gefertigt sein. Dieses duroplastische Material kann, muss aber nicht, glasfaserverstärkt sein. Beispielsweise kann das duroplastische Material ein ausgehärtetes Kunstharz sein. Dieses ausgehärtete Kunstharz kann auch ohne Glasfaserverstärkung auskommen.

Zwischen dem Gehäuse 45 und der Wellenstruktur 44 weist der Aussenring 4 einen Innenraum 46 auf, welcher um seine in seine Axialrichtung 41 durchgehende Öffnung 42 verläuft. Dieser Innenraum 46 enthält, wie im Zusammenhang mit Figuren 5a und 5b genauer erläutert, weitere Elemente des Aussenrings 4 und ist wie in Figur 3b gezeigt mit einer Vergussmasse 47 als Füllmaterial aufgefüllt.

In Figur 4 ist das Gehäuse 45 des Aussenrings 4 aus der gleichen Perspektive gezeigt, wie der Aussenring 4 in Figur 3b gezeigt ist. Dabei ist aber in Figur 4 der Innenraum 46 nicht mit der Vergussmasse 47 aufgefüllt. Zudem sind im Innenraum 46 noch keine weiteren Elemente eingebaut, damit der Innenraum 46 deutlich zu erkennen ist. Dadurch ist erkennbar, dass der Innenraum 46 um die in die Axialrichtung 41 des Aussenrings 4 durchgehende Öffnung 42 im Aussenring 4 umlaufend ausgebildet ist. Weiter ist in der Figur 4 zu erkennen, dass das Gehäuse 45 des Aussenrings 4 zusammen mit dem Innenmantel 43 und der Wellenstruktur 44 einstückig ausgebildet ist.

Figuren 5a und 5b zeigen je eine Ansicht des Aussenrings 4. In Figur 5a ist eine Schnittdarstellung entlang einer Ebene, in welcher eine Mittelachse und damit die Axialrichtung 41 des Aussenrings 4 liegen, gezeigt. In Figur 5b hingegen ist eine Aufsicht von oben entlang der Axialrichtung auf den Aussenring 4 gezeigt. Dabei ist in Figur 5b die Vergussmasse 47 nicht gezeigt, sodass die weiteren Elemente im Innenraum 46 des Aussenrings 4 erkennbar sind.

Wie in den Figuren 5a und 5b erkennbar ist, sind im Innenraum 46 des Aussenrings 4 ein RFID-Transponder 51, welcher den Identifikator 13 in der Form eines digitalen, eindeutig kennzeichnenden Codes enthält, sowie eine mit dem RFID-Transponder 51 verbundene, ringförmige Antenne 50 zur Übermittlung des Identifikators 13 mittels elektromagnetischer Wellen, angeordnet. Dabei verläuft die ringförmige Antenne 5 um die in Axialrichtung 41 des Aussenrings 4 durch den Aussenring 4 durchgehende Öffnung 42 zur Aufnahme des elastischen Innenelements 3 sowie des Schafts 101 des Schaftwerkzeugs 101. Um den Identifikator 13 auszulesen, dient das in Figur 1 schematisch als Rechteck dargestellte Auslesegerät 200. Dieses Auslesegerät 200 kann elektromagnetische Wellen mit geringer Reichweite erzeugen, um den Identifikator 13 auszulesen. Dabei wird mittels der elektromagnetischen Wellen einerseits der Identifikator 13 aus dem RFID-Transponder 51 ausgelesen und andererseits der RFID-Transponder 51 mit der für das Auslesen notwendigen Energie versorgt. In einer Variante dazu kann das Auslesegerät 200 hochfrequente Radiowellen und damit hochfrequente elektromagnetische Wellen erzeugen, um den Identifikator 13 auszulesen. In diesem Fall weist der RFID-Transponder 51 eine Batterie oder einen wiederaufladbaren Akkumulator als Energieversorgung auf.

Wie in Figur 5b zu erkennen ist, ist im Innenraum 46 des Aussenrings 4 weiter ein Beschleunigungssensor 52 zum Erfassen von Beschleunigungsdaten angeordnet, wobei die durch den Beschleunigungssensor 52 erfassten Beschleunigungsdaten durch den RFID-Transponder 51 und die mit dem RFID-Transponder 51 verbundene ringförmige Antenne 50 mittels elektromagnetischer Wellen übermittelbar sind. Ausserdem ist im Innenraum 46 des Aussenrings 4 ein Temperatursensor 53 zum Erfassen von Temperaturdaten einer Temperatur am Ort des Temperatursensors 53 angeordnet, wobei die durch den Temperatursensor 53 erfassten Temperaturdaten durch den RFID-Transponder 51 und die mit dem RFID-Transponder 51 verbundene ringförmige Antenne 50 mittels elektromagnetischer Wellen übermittelbar sind. Weiter ist im Innenraum 46 des Aussenrings 4 ein Datenspeicherelement 54 zum Speichern von Zustandsdaten zu einsatzspezifischen Zuständen des Schaftwerkzeugs 100 angeordnet, wobei die Zustandsdaten durch den RFID-Transponder 51 und die mit dem RFID-Transponder 51 verbundene ringförmige Antenne 50 mittels elektromagnetischer Wellen übermittelbar sind. Dabei ist das Datenspeicherelement 54 mit dem RFID-Transponder 51, dem Beschleunigungssensor 52 und dem Temperatursensor 53 verbunden. Sowohl die Beschleunigungsdaten als auch die Temperaturdaten sind Zustandsdaten und im Datenspeicherelement 54 speicherbar.

In Figur 5b sind die ringförmige Antenne 50, der RFID-Transponder 51, der Beschleunigungssensor 52, der Temperatursensor 53 und das Datenspeicherelement 54 als separate Elemente dargestellt. Dabei können der RFID-Transponder 51, der Beschleunigungssensor 52, der Temperatursensor 53 und das Datenspeicherelement 54 je auf einem separaten Chip angeordnet sein. Das Datenspeicherelement 54 ist in diesem Fall ein Datenspeicherchip. Der RFID-Transponder 51, der Beschleunigungssensor 52, der Temperatursensor 53 und das Datenspeicherelement 54 können aber auch alle auf einem gemeinsamen Chip angeordnet sein oder zwei oder drei des RFID-Transponders 51, Beschleunigungssensors 52, Temperatursensors 53 und Datenspeicherelements 54 können auf einem gemeinsamen Chip angeordnet sein. Dieser Chip kann kreisförmig sein oder kreisförmig biegbar ausgebildet sein. Bei all diesen Varianten kann zugleich auch die ringförmige Antenne 50 auf dem gemeinsamen Chip angeordnet sein.

Da die ringförmige Antenne 50, der RFID-Transponder 51, der Beschleunigungssensor 52, der Temperatursensor 53 und das Datenspeicherelement 54 im Innenraum 46 des Aussenrings 4 angeordnet sind, sind sie vorgehend erwähnte, weitere, im Innenraum 46 angeordnete Elemente. Wie in der Figur 5b zu erkennen ist, ist dabei das Datenspeicherelement 54 im Innenraum 46 des Aussenrings 4 dem RFID-Transponder 51 radial gegenüberliegen als Ausgleichsgewicht angeordnet. Anstelle des Datenspeicherelements 54 kann aber auch der Beschleunigungssensor 52 oder der Temperatursensor 53 derart als Ausgleichsgewicht angeordnet sein. Im in Figur 5b gezeigten Beispiel sind der Beschleunigungssensor 52 und der Temperatursensor 53 sich radial gegenüberliegend als gegenseitige Ausgleichsgewichte im Innenraum 46 des Aussenrings 4 angeordnet. Dabei sind der RFID-Transponder 51, der Beschleunigungssensor 52, der Temperatursensor 53 und das Datenspeicherelement 54 übers Kreuz und somit gewichtssymmetrisch um die in Axialrichtung 41 des Aussenrings 4 durchgehende Öffnung 42 im Innenraum 46 des Aussenrings 4 angeordnet, um eine Unwucht des Identifikationselements 1 zu verhindern, wenn das Identifikationselement 1 auf dem Schaft 101 des Schaftwerkzeugs 100 aufgesteckt und in seine Axialrichtung 11 festsetzt ist und das Schaftwerkzeug 100 um eine Längsachse seines Schafts 101 rotiert wird.

In einer Variante davon umfasst das Identifikationselement 1 kein Datenspeicherelement und entsprechend die Antenne 50, den RFID-Transponder 51, den Beschleunigungssensor 52 und den Temperatursensor 53. In einer weiteren Variante umfasst das Identifikationselement 1 keinenTemperatursensor und entsprechend die Antenne 50, den RFID-Transponder 51, den Beschleunigungssensor 52 und das Datenspeicherelement 54. In einer weiteren Variante umfasst das Identifikationselement 1 keinen Beschleunigungssensor und entsprechend die Antenne 50, den RFID-Transponder 51, den Temperatursensor 53 und das Datenspeicherelement 54. In einer weiteren Variante umfasst das Identifikationselement 1 keinen Temperatursensor und kein Datenspeicherelement. In dieser Variante umfasst das Identifikationselement 1 die Antenne 50, den RFID-Transponder 51 und den Beschleunigungssensor 52. In einer weiteren Variante umfasst das Identifikationselement 1 keinen Beschleunigungssensor und kein Datenspeicherelement. In dieser Variante umfasst das Identifikationselement 1 die Antenne 50, den RFID-Transponder 51 und den Temperatursensor 53. In einer weiteren Variante umfasst das Identifikationselement 1 keinen Beschleunigungssensor, keinen Temperatursensor und kein Datenspeicherelement. In dieser Variante umfasst das Identifikationselement 1 die Antenne 50, den RFID-Transponder 51.

Um das Identifikationselement 1 auf den Schaft 101 des Schaftwerkzeugs 101 aufzustecken und in seine Axialrichtung 11 festzusetzen, wie es in Figur 1 aufgesteckt dargestellt ist, wird die zweiteilige Ringhülse 2 auf den Schaft 101 des Schaftwerkzeugs 100 aufgesteckt, indem zunächst das elastische Innenelement 3 über den Schaft 101 geschoben wird, wonach der Aussenring 4 über den Schaft 101 und über den Haltering 35 bis zum Anschlagsring 34 auf das elastische Innenelement 3 aufgeschoben und damit aufgebracht wird, sodass der Schaft 101 von der Öffnung 42 im Aussenring 4 aufgenommen ist bzw. sodass der Schaft 101 durch die Öffnung 42 im Aussenring 4 verläuft.

Figuren 6a und 6b zeigen je eine Ansicht eines Aussenrings 64 eines weiteren erfindungsgemässen Identifikationselements. In Figur 6a ist eine Schnittdarstellung entlang einer Ebene, in welcher eine Mittelachse und damit die Axialrichtung 41 des Aussenrings 64 liegen, gezeigt. In Figur 6b hingegen ist eine Aufsicht von oben entlang der Axialrichtung auf den Aussenring 6 gezeigt. Dabei ist in Figur 6b die Vergussmasse 47 nicht gezeigt, sodass die weiteren Elemente im Innenraum 46 des Aussenrings 64 erkennbar sind.

Das weitere Identifikationselement, dessen Aussenring 64 in den Figuren 6a und 6b gezeigt ist, ist ebenfalls als zweiteilige Ringhülse mit einem elastischen Innenelement und dem Aussenring 64 gebildet. Das elastische Innenelement ist dabei identisch mit dem elastischen Innenelement 3 des anhand der Figuren 1 bis 5b illustrierten Identifikationselements 1. Auch der nun in Figuren 6a und 6b gezeigte Aussenring 64 ist weitestgehend identisch mit dem Aussenring 4 des anhand der Figuren 1 bis 5b illustrierten Identifikationselements 1. So bildet der in Figuren 6a und 6b gezeigte Aussenring 64 ebenfalls das Gehäuse 45, weist den Innenmantel 43 mit der Wellenstruktur 44 und den Innenraum 46 auf. Dabei sind im Innenraum 46 weiterhin der Beschleunigungssensor 52 und das Datenspeicherelement 54 an den gleichen Positionen angeordnet. Die weiteren Elemente, welche im Innenraum 46 des in Figuren 6a und 6b gezeigten Aussenrings 64 angeordnet sind, sind jedoch anders. So weist der Aussenring 64 anstelle eines RFID-Transponders und einer damit verbundenen Antenne ein an der Stelle des RFID-Transponders angeordnetes Bluetooth-Element 61 zum Übermitteln des Identifikators 13 auf. Zudem ist nun der Identifikator 13 im dem Bluetooth-Element 61 radial gegenüberliegend angeordneten Datenspeicherelement 54 gespeichert. Ausserdem ist anstelle des Temperatursensors eine Batterie 55 zur Stromversorgung des Bluetooth-Elements 61 angeordnet.

Die Erfindung ist nicht auf die vorliegend beschriebenen Ausführungsformen beschränkt. Vielmehr stehen dem Fachmann diverse Varianten und Ausführungsformen zur Umsetzung der zur Verfügung.

Zusammenfassend ist festzustellen, dass ein aufsteckbares und wiederabnehmbares Identifikationselement bereitgestellt wird, welches einfach aufsteckbar ist und die Funktion des Schaftwerkzeugs, auf welches es aufgesteckt ist, weder nachhaltig stört noch beeinträchtigt.

## Patentansprüche

1. Ein aufsteckbares und wiederabnehmbares Identifikationselement (1) für ein spanendes Schaftwerkzeug (100), insbesondere einen Bohrer oder Schaftfräser, wobei das Identifikationselement (1) einen Identifikator (13) zur Identifikation des Schaftwerkzeugs (100) aufweist, wobei das Identifikationselement (100) eine zweiteilige Ringhülse (2) ist, welche als erstes Teil ein elastisches Innenelement (3) und als zweites Teil einen auf das elastische Innenelement (3) aufbringbaren Aussenring (4, 64) mit einer in Axialrichtung (41) des Aussenrings (4, 64) durchgehenden Öffnung (42) zur Aufnahme des elastischen Innenelements (3) sowie eines in die Axialrichtung (41) des Aussenrings (4, 64) ausgerichteten Schafts (101) des Schaftwerkzeugs (100) aufweist,
wobei das elastische Innenelement aus einem elastischen Material gefertigt ist, wobei das elastische Material ein Material mit einem Elastizitätsmodul *E* von höchstens 10 GPa, besonders bevorzugt höchstens 5 GPa, ganz besonders bevorzugt höchstens 1 GPa ist, **dadurch gekennzeichnet, dass** der Aussenring (4, 64) einen seiner durchgehenden Öffnung (42) zugewandten und seine durchgehende Öffnung (42) abgrenzenden Innenmantel (43) aufweist, welcher eine Wellenstruktur (44) zur Erhöhung von Haltekräften aufweist, welche Haltekräfte zwischen dem Aussenring (4, 64) und dem elastischen Innenelement (3) auftreten, wenn das elastische Innenelement (3) in der Öffnung des Aussenrings (4, 64) aufgenommen ist, wobei die Wellenstruktur (44) eine Amplitude im Bereich von 0.02 mm bis 0.1 mm aufweist.

2. Das Identifikationselement (1) nach Anspruch 1, **dadurch gekennzeichnet, dass** das elastische Innenelement (3) ein Klemmring ist, welcher auf den Schaft (101) des Schaftwerkzeugs (100) klemmbar ist.

3. Das Identifikationselement (1) nach Anspruch 1 oder 2, **dadurch gekennzeichnet, dass** das elastische Innenelement (3) aus einem Elastomer gefertigt ist.

4. Das Identifikationselement (1) nach einem der Ansprüche 1 bis 3, **dadurch gekennzeichnet, dass** der Aussenring (4, 64) ein Gehäuse (45) des Identifikationselements (1) bildet.

5. Das Identifikationselement (1) nach Anspruch 4, **dadurch gekennzeichnet, dass** das Gehäuse (45) aus einem duroplastischen Material gefertigt ist.

6. Das Identifikationselement (1) nach einem der Ansprüche 1 bis 5, **dadurch gekennzeichnet, dass** der Aussenring (4, 64) einen um die in seine Axialrichtung (41) durchgehende Öffnung (42) im Aussenring (4, 64) umlaufenden Innenraum (46) aufweist.

7. Das Identifikationselement (1) nach einem der Ansprüche 1 bis 6, **dadurch gekennzeichnet, dass** das Identifikationselement (1) einen RFID-Transponder (51) umfasst, welcher den Identifikator (13) in der Form eines digitalen, kennzeichnenden, insbesondere eindeutig kennzeichnenden Codes enthält, und dass das Identifil<ationselement (1) eine mit dem RFID-Transponder (51) verbundene Antenne (50) zur Übermittlung des Identifikators (13) mittels elektromagnetischer Wellen umfasst.

8. Das Identifikationselement (1) nach Anspruch 7, **dadurch gekennzeichnet, dass**
a) das Identifikationselement (1) einen Beschleunigungssensor (52) zum Erfassen von Beschleunigungsdaten umfasst, wobei die durch den Beschleunigungssensor (52) erfassten Beschleunigungsdaten durch den RFID-Transponder (51) und die mit dem RFID-Transponder (51) verbundene Antenne (50) mittels elektromagnetische Wellen übermittelbar sind, und/oder
b) das Identifikationselement (1) einen Temperatursensor (53) zum Erfassen von Temperaturdaten einer Temperatur am Ort des Temperatursensors (53) umfasst, wobei die durch den Temperatursensor (53) erfassten Temperaturdaten durch den RFID-Transponder (51) und die mit dem RFID-Transponder (51) verbundene Antenne (50) mittels elektromagnetische Wellen übermittelbar sind.

9. Das Identifikationselement (1) nach Anspruch 7 oder 8, **dadurch gekennzeichnet, dass** das Identifikationselement (1) ein Datenspeicherelement (54), insbesondere einen Datenspeicherchip, zum Speichern von Zustandsdaten zu einsatzspezifischen Zuständen des Schaftwerl<zeugs (100) umfasst, wobei die Zustandsdaten durch den RFID-Transponder (51) und die mit dem RFID-Transponder (51) verbundene Antenne (50) mittels elektromagnetische Wellen übermittelbar sind.

10. Das Identifikationselement (1) nach Anspruch 6 und einem der Ansprüche 7 bis 9, **dadurch gekennzeichnet, dass** der RFID-Transponder (51) im Innenraum (46) des Aussenrings (4) angeordnet ist.

11. Das Identifikationselement (1) nach Anspruch 10, **dadurch gekennzeichnet, dass** im Innenraum (46) des Aussenrings (4) dem RFID-Transponder (51) radial gegenüberliegend ein Ausgleichsgewicht angeordnet ist.

12. Das Identifikationselement (1) nach Anspruch 6 und einem der Ansprüche 7 bis 11, **dadurch gekennzeichnet, dass** die Antenne (50) eine ringförmige Antenne ist, welche im Innenraum (46) des Aussenrings (4, 64) angeordnet ist und um die in Axialrichtung (41) des Aussenrings (4, 64) durch den Aussenring (4, 64) durchgehende Öffnung (42) zur Aufnahme des elastischen Innenelements (3) sowie des Schafts (101) des Schaftwerkzeugs (100) verläuft.

13. Spanendes Schaftwerkzeug (100), insbesondere ein Bohrer oder Schaftfräser, mit einem Identifikationselement (1) nach einem der Ansprüche 1 bis 12.

14. Anordnung mit einem Identifikationselement (1) nach einem der Ansprüche 1 bis 12 und einem Auslesegerät (200) zum Auslesen des Identifikationselements (1) zum Lesen des Identifikators (13).

## Claims

1. An attachable and removable identification element (1) for a cutting shank tool (100), in particular a drill or end mill, wherein the identification element (1) provides an identifier (13) for identifying the shank tool (100), wherein the identification element (100) is a two-part annular sleeve (2), which has, as a first part, an elastic inner element (3) and, as a second part, an outer ring (4, 64) which can be fitted onto the elastic inner element (3) and has an opening (42) which passes through the outer ring (4, 64) in the axial direction (41) of the outer ring (4, 64) and is intended for receiving the elastic inner element (3) and a shank (101) of the shank tool (100) aligned in the axial direction (41) of the outer ring (4, 64),
the elastic inner element being made of an elastic material, the elastic material being a material with a modulus of elasticity E of at most 10 GPa, particularly preferably at most 5 GPa, very particularly preferably at most 1 GPa, **characterized in that** the outer ring (4, 64) has an inner jacket (43) facing its opening (42) and delimiting its opening (42), the inner jacket (43) having a wave structure (44) for increasing holding forces, which holding forces occur between the outer ring (4, 64) and the elastic inner element (3) when the elastic inner element (3) is received in the opening of the outer ring (4, 64), the wave structure (44) having an amplitude in the range from 0. 02 mm to 0.1 mm.

2. The identification element (1) according to claim 1, **characterized in that** the elastic inner element (3) is a clamping ring which can be clamped onto the shank (101) of the shank tool (100).

3. The identification element (1) according to claim 1 or 2, **characterized in that** the elastic inner element (3) is made of an elastomer.

4. The identification element (1) according to any one of claims 1 to 3, **characterized in that** the outer ring (4, 64) forms a housing (45) of the identification element (1).

5. The identification element (1) according to claim 4, **characterized in that** the housing (45) is made of a thermosetting material.

6. The identification element (1) according to any one of claims 1 to 5, **characterized in that** the outer ring (4, 64) provides an inner space (46), the inner space (46) running around the opening (42) in the outer ring (4, 64) which passes through in the outer rings (4,64) axial direction (41).

7. The identification element (1) according to any one of claims 1 to 6, **characterized in that** the identification element (1) comprises an RFID transponder (51) which contains the identifier (13) in the form of a digital, identifying, in particular uniquely identifying code, and **in that** the identification element (1) comprises an antenna (50) connected to the RFID transponder (51) for transmitting the identifier (13) by means of electromagnetic waves.

8. The identification element (1) according to claim 7, **characterized in that**
a) the identification element (1) comprises an acceleration sensor (52) for detecting acceleration data, wherein the acceleration data detected by the acceleration sensor (52) can be transmitted by the RFID transponder (51) and the antenna (50) connected to the RFID transponder (51) by means of electromagnetic waves, and/or
b) the identification element (1) comprises a temperature sensor (53) for detecting temperature data of a temperature at the location of the temperature sensor (53), wherein the temperature data detected by the temperature sensor (53) can be transmitted by the RFID transponder (51) and the antenna (50) connected to the RFID transponder (51) by means of electromagnetic waves.

9. The identification element (1) according to claim 7 or 8, **characterized in that** the identification element (1) comprises a data storage element (54), in particular a data storage chip, for storing status data relating to use-specific statuses of the shank tool (100), wherein the status data can be transmitted by the RFID transponder (51) and the antenna (50) connected to the RFID transponder (51) by means of electromagnetic waves.

10. The identification element (1) according to claim 6 and one of claims 7 to 9, **characterized in that** the RFID transponder (51) is arranged in the inner space (46) of the outer ring (4).

11. The identification element (1) according to claim 10, **characterized in that** a balance weight is arranged in the inner space (46) of the outer ring (4) radially opposite the RFID transponder (51).

12. The identification element (1) according to claim 6 and one of claims 7 to 11, **characterized in that** the antenna (50) is an annular antenna which is arranged in the inner space (46) of the outer ring (4, 64) and extends around the opening (42) passing through the outer ring (4, 64) in the axial direction (41) of the outer ring (4, 64) for receiving the elastic inner element (3) and the shank (101) of the shank tool (100).

13. Cutting shank tool (100), in particular a drill or end mill, with an identification element (1) according to any one of claims 1 to 12.

14. Arrangement comprising an identification element (1) according to any one of claims 1 to 12 and a read-out device (200) for reading out the identification element (1) for reading the identifier (13).

## Revendications

1. Un élément d'identification (1) emboîtable puis désolidarisable pour un outil à tige (100) d'usinage par enlèvement de copeaux, notamment un foret ou une fraise à queue, l'élément d'identification (1) comportant un identifiant (13), destiné à identifier l'outil à tige (100), l'élément d'identification (100) étant une douille annulaire (2) en deux parties, laquelle comporte en tant que première partie un élément interne (3) élastique et en tant que deuxième partie une bague externe (4, 64), susceptible d'être montée sur l'élément interne élastique (3), pourvue d'un orifice (42) traversant dans la direction axiale (41) de la bague externe (4, 64), destiné à réceptionner l'élément interne (3) élastique, ainsi qu'une tige (101) de l'outil à tige (100) orientée dans la direction axiale (41) de la bague externe (4, 64),
l'élément interne élastique étant fabriqué en une matière élastique, la matière élastique étant une matière faisant preuve d'un module d'élasticité E d'un maximum de 10 GPa, de manière particulièrement préférentielle, d'un maximum de 5 GPa, de manière tout particulièrement préférentielle, d'un maximum de 1 GPa, **caractérisé en ce que** la bague externe (4, 64) comporte une enveloppe interne (43) qui fait face à son orifice (42) traversant et qui délimite son orifice (42) traversant, laquelle présente une structure ondulée (44), destinée à augmenter des forces de retenue, lesquelles forces de retenue se produisent entre la bague externe (4, 64) et l'élément interne (3) élastique, lorsque l'élément interne (3) élastique est réceptionné dans l'orifice de la bague externe (4, 64), la structure ondulée (44) faisant preuve d'une amplitude de l'ordre de 0.02 mm à 0.1 mm.

2. L'élément d'identification (1) selon la revendication 1, **caractérisé en ce que** l'élément interne élastique (3) est une bague de serrage, laquelle est susceptible d'être serrée sur la tige (101) de l'outil à tige (100) .

3. L'élément d'identification (1) selon la revendication 1 ou 2, **caractérisé en ce que** l'élément interne élastique (3) est fabriqué en un élastomère.

4. L'élément d'identification (1) selon l'une quelconque des revendications 1 à 3, **caractérisé en ce que** la bague externe (4, 64) forme un boîtier (45) de l'élément d'identification (1).

5. L'élément d'identification (1) selon la revendication 4, **caractérisé en ce que** le boîtier (45) est fabriqué dans une matière duroplastique.

6. L'élément d'identification (1) selon l'une quelconque des revendications 1 à 5, **caractérisé en ce que** la bague externe (4, 64) comporte un espace interne (46) périphérique autour de son orifice (42) traversant dans sa direction axiale (41) dans la bague externe (4, 64).

7. L'élément d'identification (1) selon l'une quelconque des revendications 1 à 6, **caractérisé en ce que** l'élément d'identification (1) comprend un transpondeur RFID (51), lequel contient l'identifiant (13) sous la forme d'un code numérique d'identification, notamment d'identification indubitable, et **en ce que** l'élément d'identification (1) comprend une antenne (50) connectée avec le transpondeur RFID (51), pour transmettre l'identifiant (13) au moyen d'ondes électromagnétiques.

8. L'élément d'identification (1) selon la revendication 7, **caractérisé en ce que**
a) l'élément d'identification (1) comprend un capteur d'accélération (52), destiné à détecter des données d'accélération, les données d'accélération détectées par le capteur d'accélération (52) étant transmissibles par le transpondeur RFID (51) et par l'antenne (50) connectée avec le transpondeur RFID (51) au moyen d'ondes électromagnétiques, et / ou
b) l'élément d'identification (1) comprend un capteur de température (53), destiné à détecter des données de température d'une température sur site du capteur de température (53), les données de température détectées par le capteur de température (53) étant transmissibles par le transpondeur RFID (51) et par l'antenne (50) connectée avec le transpondeur RFID (51) au moyen d'ondes électromagnétiques.

9. L'élément d'identification (1) selon la revendication 7 ou 8, caractérisé en ce l'élément d'identification (1) comprend un élément de mémorisation (54) de données, notamment une puce de mémorisation de données, destiné(e) à mémoriser des données d'états concernant des états spécifiques à l'utilisation de l'outil à tige (100), les données d'état étant transmissibles par le transpondeur RFID (51) et par l'antenne (50) connectée avec le transpondeur RFID (51) au moyen d'ondes électromagnétiques.

10. L'élément d'identification (1) selon la revendication 6 et l'une quelconque des revendications 7 à 9, **caractérisé en ce que** le transpondeur RFID (51) est placé dans l'espace interne (46) de la bague externe (4) .

11. L'élément d'identification (1) selon la revendication 10, **caractérisé en ce que** dans l'espace interne (46) de la bague externe (4), un contrepoids est placé au vis-à-vis en direction radiale du transpondeur RFID-(51) .

12. L'élément d'identification (1) selon la revendication 6 et l'une quelconque des revendications 7 à 11, **caractérisé en ce que** l'antenne (50) est une antenne de forme annulaire, laquelle est placée dans l'espace interne (46) de la bague externe (4, 64) et s'écoule autour de l'orifice (42) de la bague externe (4, 64) traversant dans la direction axiale (41) la bague externe (4, 64), pour recevoir l'élément interne (3) élastique, ainsi que la tige (101) de l'outil à tige (100) .

13. Outil à tige (100) d'usinage par enlèvement de copeaux, notamment un foret ou une fraise à queue, pourvu d'un élément d'identification (1) selon l'une quelconque des revendications 1 à 12.

14. Ensemble, comprenant un élément d'identification (1) selon l'une quelconque des revendications 1 à 12 et un appareil de lecture (200), destiné à lire l'élément d'identification (1) pour la lecture de l'identifiant (13) .
